# FASCICULE DE BREVET EUROPEEN

(11) **EP 2 591 544 B1**
(45) Date de publication et mention de la délivrance du brevet: **23.09.2015**
(21) Numéro de dépôt: 11736431.5
(22) Date de dépôt: 24.06.2011
(51) Int. Cl.: H02M 1/32, H02M 7/5387

(54) **CONVERTISSEUR STATIQUE AVEC STRUCTURE REDONDANTE**
STATISCHER WANDLER MIT REDUNDANTER STRUKTUR
STATIC CONVERTER HAVING A REDUNDANT STRUCTURE

(30) Priorité: 07.07.2010 FR 1055523
(43) Date de publication de la demande: 15.05.2013
(73) Titulaire: Institut National Polytechnique de Toulouse, 31029 Toulouse (FR); Universite De Toulouse II Le Mirail, 31100 Toulouse (FR); Université Montpellier 2 Sciences et Techniques, 34095 Montpellier Cedex 5 (FR); Centre National de la Recherche Scientifique (CNRS), 75016 Paris (FR)
(72) Inventeur: HUSELSTEIN, Jean-Jacques, F-34000 Montpellier (FR); SARRAUTE, Emmanuel, F-31320 Auzeville Tolosane (FR); RICHARDEAU, Frédéric, F-31130 Flourens (FR); MARTIRE, Thierry, F-30250 Aubais (FR)
(74) Mandataire: Domenego, Bertrand
(86) Numéro de dépôt international: PCT/FR2011/051460
(87) Numéro de publication internationale: WO 2012/004488

(56) Documents cités:
- US-A1- 2004 125 523
- PABLO LEZANA ET AL: "Survey on Fault Operation on Multilevel Inverters", IEEE TRANSACTIONS ON INDUSTRIAL ELECTRONICS, IEEE SERVICE CENTER, PISCATAWAY, NJ, USA, vol. 57, no. 7, 1 juillet 2010 (2010-07-01), pages 2207-2218, XP011295900, ISSN: 0278-0046
- ZHANG R ET AL: "Four-legged three-phase PFC rectifier with fault tolerant capability", POWER ELECTRONICS SPECIALISTS CONFERENCE, 2000. PESC 00. 2000 IEEE 31S T ANNUAL 18-23 JUNE 2000, PISCATAWAY, NJ, USA,IEEE, vol. 1, 18 juin 2000 (2000-06-18), pages 359-364, XP010517263, ISBN: 978-0-7803-5692-4

## Description

La présente invention concerne des convertisseurs statiques de tension (DC/AC, DC/DC et AC/AC), destinés à la conversion d'énergie électrique depuis une source de tension continue (DC), respectivement de tension alternative (AC) vers une charge alimentée en courant continu (DC) ou en courant alternatif (AC), respectivement en courant alternatif (AC), et dont une structure de redondance assure le maintien opérationnel ou la continuité de service du convertisseur en cas d'une panne sur l'un des ses composants de puissance. L'invention concerne également les procédés correspondants de maintien du fonctionnement de convertisseurs statiques munis de telles structures de redondance. Le concept de redondance pour cellules de commutation sous-jacent à l'invention peut être étendu également aux structures des redresseurs de tension qui convertissent de l'énergie électrique à courant alternatif en de l'énergie électrique à courant continu (AC/DC).

Dans le domaine de la sûreté des convertisseurs statiques, il existe une sûreté en terme de fonctionnement du convertisseur, c'est-à-dire de respect de l'intégrité physique du convertisseur au sens technologique et une sureté en terme de disponibilité applicative c'est-à-dire de continuité de service. Le document US 2004/125523 A1 décrit un convertisseur statique dans lequel une solution visant à assurer la continuité de service est mise en oeuvre. Parmi les solutions visant à assurer la continuité de service, il existe les solutions utilisant la redondance système, les solutions utilisant la redondance active intégrée, et les solutions utilisant la redondance active non intégrée et enfin la redondance passive. La redondance système consiste à segmenter le flux de puissance au moyen d'un partitionnement du courant (au travers d'un nombre Np de convertisseurs ou cellules en parallèle) et/ou d'un partitionnement en tension (au travers d'un nombre Np de convertisseurs ou cellules montés en série ou en cascade) et à isoler un élément lorsqu'il devient défectueux : en circuit ouvert pour la configuration en parallèle et en circuit fermé pour la configuration en série. Cette approche est surtout utilisée pour les applications de forte puissance lorsque la charge est naturellement partitionnée ou répartie et lorsque les convertisseurs sont réalisés sous la forme d'un nombre important de modules indépendants. Elle présente néanmoins l'inconvénient d'accroître la complexité et le coût du convertisseur en termes de nombre d'éléments semi-conducteurs de puissance requis et de circuits auxiliaires.

La redondance active intégrée consiste à utiliser un montage en série d'un nombre N relativement importants d'éléments semi-conducteurs de puissance, à utiliser la propriété de passage spontané à un état basse impédance stable d'un élément semi-conducteur lorsqu'il devient défaillant, et à mettre à profit le faible report en tension sur les N-1 autres semi-conducteurs pour assurer le maintien de la fonction au prix d'une baisse du courant et du flux de puissance. Il existe ainsi dans ce cas une dégradation des conditions d'utilisation du convertisseur statique et si la continuité de service est assurée le service n'en est pas moins dégradé.

La redondance active non intégrée requiert l'utilisation de moyens auxiliaires actifs à commande permettant la connexion des semi-conducteurs de puissance sur les lignes traversées par la puissance. Ce sont par exemple des relais, des thyristors ou des transistors supportant de forts courants électriques. L'inconvénient d'une telle redondance est la dégradation de la fiabilité de la mise en oeuvre de la redondance en cas de secours du fait notamment de l'utilisation de circuits de commande.

La redondance passive consiste à dupliquer une cellule ou un convertisseur, généralement en parallèle, le ou la placer dans un état inactif du point de vue de sa commande (ce qui ne signifie pas que la redondance soit hors tension). Aussi simple soit telle, cette forme de redondance pose le problème de la déconnexion de la charge de la cellule défaillante puis sa connexion à la cellule de secours, surtout sans une configuration multiphasée où le surcoût et la complexité liés aux organes auxiliaires devient rédhibitoire.

Le document intitulé « Fault-tolerant Multilevel Converter Topology » de S. Ceballos et al., publié dans IEEE ISIE 2006, July 9-12, Québec , Canada, apporte une amélioration à la fiabilité d'un onduleur multi-niveaux à redondance active non intégrée en utilisant à la place de moyens de connexion actifs commandés, des diodes comme moyens de connexion passifs non commandés. Le document décrit une architecture avec des variantes d'un onduleur multi-niveaux résistant aux pannes.

Le document décrit en particulier un onduleur à sorties triphasées multi-niveaux comprenant pour chacune des phases un bras de commutation principal. Chaque bras de commutation principal comprend quatre transistors en série dans la même direction. Le point milieu de cette association forme une sortie de délivrance du courant à une phase de la charge électrique et chaque interrupteur électronique comprend l'association d'un transistor de puissance et d'une diode montée en antiparallèle. Les interrupteurs des cellules de commutation des bras de commutation principaux sont munis de moyens de commande configurés pour que l'onduleur délivre en fonctionnement normal sur chaque phase un courant alternatif à la même fréquence et à trois niveaux de tension. Chaque bras de commutation principal est connecté à une même première borne de polarité positive et à une deuxième borne de polarité négative de la source de tension à courant continu au travers d'un premier fusible et d'un deuxième fusible associés. L'onduleur comprend également un bras auxiliaire de commutation avec une structure différente à capacité flottante destinée à fournir de façon originale un point neutre de tension stable correspondant à la moitié de la tension totale pour les trois bras de commutation principaux. Le bras auxiliaire de commutation comprend une structure d'interrupteurs formés par des transistors bien différente, sous forme de deux cellules imbriquées, l'une externe et l'autre interne au bras. Le point milieu de la cellule de commutation interne imbriquée du bras auxiliaire est raccordé aux bornes internes et symétriques associées à un bras de commutation principal différent au travers d'un circuit d'aiguillage de courant d'aiguillage différent associé. Chaque circuit d'aiguillage comprend une première diode connectée en direct depuis la sortie point milieu de la cellule de commutation interne du bras auxiliaire jusqu'à une première borne point commun des deux premiers transistors du bras principal. Cette première diode est connectée indirectement à la première borne à polarité positive de la source au travers d'un premier interrupteur et d'un fusible. Chaque circuit d'aiguillage comprend une deuxième diode connectée en direct depuis la sortie point milieu de la cellule de commutation interne du bras auxiliaire jusqu'à une deuxième borne, point commun des autres transistors en série du bras de commutation principal. Cette deuxième diode est connectée indirectement à la deuxième borne à polarité négative de la source au travers du quatrième interrupteur du bras et de l'autre fusible. En fonctionnement normal, les moyens de commande associés aux interrupteurs des cellules de commutation du bras auxiliaire sont configurés de sorte à réguler le point neutre de tension par la fourniture d'un courant distribué aux bras de commutation principaux. Ainsi, durant un fonctionnement normal les interrupteurs du bras de commutation auxiliaire sont sollicités et du courant traverse le bras. Le bras auxiliaire n'agit donc pas suivant une redondance passive chaude mais bien suivant une redondance active non intégrée.

En mode de secours, lorsque sur un bras de commutation principal en mode actif normal un interrupteur devient défaillant, les premier et deuxième fusibles du bras de commutation principal isolent le bras de la source électrique du fait que leur caractéristique en I²t est inférieure à celle interconnexions puce-boitier des transistors de puissance. Les moyens de commande des interrupteurs du bras auxiliaire et du bras principal défectueux sont alors reconfigurés de sorte que le bras auxiliaire se substitue au bras de commutation principal défectueux. Dans ce cas, la phase correspondant au défaut initial reste en modulation trois niveaux mais la fourniture d'un point neutre aux deux autres bras de commutation principaux n'est plus assurée. Ces derniers doivent alors subir un mode dégradé passant d'une modulation de trois niveaux à deux niveaux. En outre de manière pénalisante le passage en deux niveaux requiert soit une déconnexion du bras auxiliaire complexe à réaliser, soit le blocage permanent des diodes par la conduction permanente des transistors reliés aux fusibles. Dans le cas d'un blocage permanent des diodes, seuls les transistors internes commutent et tiennent la tension devant ainsi être surdimensionné de 100% en tension et une baisse de courant est à prévoir en mode secours.

Le but de l'invention est d'améliorer de façon simple la fiabilité et la continuité de service d'un convertisseur statique dont un composant actif en fonctionnement normal vient de tomber en panne. Cela peut se traduire par l'amélioration de la fiabilité des moyens de mise en oeuvre de la sûreté opérationnelle du convertisseur statique au travers d'un mode de secours automatique.

La présente invention donne une solution où le bras de secours est une redondance passive pouvant se connecter très simplement et indifféremment à n'importe quel bras défaillant en parallèle, sans mode dégradé ni déclassement, et sans que les autres bras non défaillants ne soient eux-mêmes reconfigurés et ne subissent de mode dégradé ou de pénalité.

A cet effet, l'invention a pour objet un convertisseur statique destiné à la conversion d'énergie électrique entre une source électrique à courant continu ou courant alternatif et une charge électrique. Le convertisseur statique comprend :
un bras principal de conversion statique comportant au moins une cellule de commutation électronique à semi-conducteurs munie de moyens de commandes associés, une première borne d'entrée et une deuxième borne d'entrée d'alimentation, aptes à être raccordées respectivement à une première polarité et à une deuxième polarité de la source électrique, une borne de sortie raccordée à une cellule de commutation de sortie et apte à être raccordée à la charge électrique , chaque cellule de commutation étant configurée au travers de ses moyens de commandes associés pour être active dans un mode nominal prédéterminé du convertisseur,
une paire de composants d'isolement, associée au bras de commutation principal, formé dune premier et d'un deuxième composants d'isolement formant chacun un dipôle, le premier composant d'isolement et le deuxième composant d'isolement étant respectivement et directement raccordés à la première borne et à la deuxième borne d'entrée d'alimentation du bras principal.

Le convertisseur statique est caractérisé en ce qu'il comprend :
un bras de conversion de secours comportant au moins une cellule de commutation électronique à semi-conducteurs munie de moyens de commande associés, une première borne d'entrée et une deuxième borne d'entrée d'alimentation, aptes à être raccordées respectivement à la première polarité et la deuxième polarité de la source électrique, une borne de sortie raccordée à une cellule de commutation de sortie, et
un circuit d'aiguillage électronique à semi-conducteurs ayant un élément de connexion connecté entre la borne de sortie du bras de secours et une borne d'entrée du bras principal parmi la première borne d'entrée et la deuxième borne d'entrée du bras principal.

Le convertisseur est caractérisé en outre en ce que :
la ou les cellules de commutation du bras principal reliées en série entre la première borne d'entrée et la deuxième borne d'entrée sont aptes chacune à présenter une impédance permanente stable inférieure à quelques dizaine de milli-ohms lorsque le bras principal a subi une défaillance consécutive à un emballement thermique ou un court-circuit d'un de ses composants semi-conducteurs, et
les composants d'isolement du bras principal sont dimensionnés de sorte à isoler le bras principal après l'écoulement d'une première durée temporelle t1 pour l'établissement d'un mode de défaillance à faible impédance stable sur la ou les cellules de commutation du bras de conversion principal reliées en série et avant l'écoulement d'une deuxième durée temporelle t2 pour éviter la création d'une ouverture de circuit sur le bras de conversion principal, et
les moyens de commande de la ou des cellules de secours formant le bras de secours sont aptes à être mis en oeuvre après l'isolement du bras de conversion principal devenu défaillant pour remplacer partiellement ou en totalité le bras principal,
l'élément de connexion est configuré pour être dans un état bloqué lorsque le bras principal est actif dans le mode nominal et pour être dans un état passant lorsque le bras principal est défaillant et que le bras de secours est devenu actif

Suivant des modes particuliers de réalisation, le convertisseur statique comporte l'une ou plusieurs des caractéristiques suivantes :
- l'élément de connexion est un élément compris dans l'ensemble constitué par une diode, un thyristor, une association de deux thyristors montés en tête-bêche et un transistor ;
- les éléments semi-conducteurs des cellules de commutation du bras de secours de conversion sont configurés pour être dans un état bloqué lorsque le bras principal est actif dans le mode nominal et pour remplacer partiellement ou en totalité le bras principal après isolement du bras devenu défaillant ;
- le convertisseur comprend des moyens d'aide à l'isolement du bras principal, les moyens d'aide à l'isolement comportant
   un thyristor auxiliaire ou une association de deux thyristors auxiliaires montés en tête bêche, branché en parallèle à la première borne d'entrée et à la deuxième borne d'entrée du bras principal, un thyristor auxiliaire étant monté lorsque la source de tension est à courant continu et une association de deux thyristors auxiliaires montés en tête bêche étant utilisé lorsque la source de tension est à courant alternatif, et
   des moyens de commande du thyristor auxiliaire ou des deux thyristors auxiliaires configurés de sorte que si le bras de conversion principal défaillant n'est pas symétriquement isolé par la paire des composants d'isolement qui lui est associée, il crée un court-circuit aux bornes de la charge afin de provoquer une isolation symétrique par chaque composant d'isolement de la paire ;
- le convertisseur comprend pour chaque cellule de commutation du bras de conversion principal des moyens de protection rapide associés aptes à détecter un courant de court-circuit intolérable de traversée de la cellule par rapport à une valeur d'un courant seuil prédéterminée et à déclencher l'ouverture de la cellule de commutation après la détection du dépassement du courant seuil ;
- le convertisseur comprend en outre des moyens de détection du bras principal défaillant aptes à commander aux moyens de commande des cellules de commutation du bras de secours d'adopter la même configuration de commande que celle du bras détecté défaillant ;
- le convertisseur statique comprend au moins deux bras principaux, chaque bras principal étant de structure identique et comportant au moins une cellule de commutation électronique munie de moyens de commande associés, une première borne d'entrée et une deuxième borne d'entrée d'alimentation aptes à être raccordées respectivement à la première polarité et la deuxième polarité de la source électrique, une borne de sortie de phase raccordée à une cellule de commutation de sortie apte à être raccordée à une phase distincte de la charge électrique, chaque cellule de commutation étant configurée au travers de ses moyens de commande pour être active dans un mode nominal prédéterminé du convertisseur, et
   le convertisseur comprend pour chaque bras de conversion principal, une paire de composants d'isolement associée et formée d'un premier composant d'isolement et d'un deuxième composant d'isolement formant chacun un dipôle, le premier composant d'isolement et le deuxième composant d'isolement étant respectivement et directement raccordés à la première borne d'entrée et à la deuxième borne d'entrée, d'alimentation, du bras principal associé, et
   le convertisseur comprend un unique bras de conversion de secours ayant au moins une cellule de commutation de sortie et une borne de sortie raccordé à la cellule de commutation de sortie, et
   le convertisseur comprend pour chaque bras de conversion principal un circuit d'aiguillage associé ayant un élément de connexion connecté entre la borne de sortie du bras de secours et la première borne d'entrée du bras de conversion principal associé, et
   le convertisseur comprend pour chaque bras de conversion principal, des moyens de détection et de localisation du bras principal défaillant aptes à commander aux moyens de commande des cellules de commutation du bras de secours d'adopter la même configuration de commande que celle du bras détecté défaillant et localisé, et
   la ou les cellules de commutation d'un bras principal quelconque reliées en série entre la première borne d'entrée et la deuxième borne d'entrée sont aptes chacune à présenter une impédance permanente stable inférieure à quelques dizaines de milli-ohms lorsque le bras principal a subi une défaillance consécutive à un emballement thermique ou un court-circuit d'un de ses composants semi-conducteurs, et
   les composants d'isolement de chaque bras principal sont dimensionnés de sorte à isoler le bras principal après l'écoulement d'une première durée temporelle t1 pour l'établissement d'un mode de défaillance à faible impédance stable sur la ou les cellules de commutation du bras principal et avant l'écoulement d'une deuxième durée t2 pour éviter la création d'une ouverture de circuit sur le bras de conversion principal, et
   les moyens de commande de la ou des cellules de secours formant le bras de secours sont aptes à être mis en oeuvre après l'isolement d'un quelconque des bras principaux devenu défaillant pour remplacer partiellement ou en totalité le bras principal devenu défaillant, et
   l'élément de connexion ou les deux éléments de connexion de chaque circuit d'aiguillage associé à un bras principal sont configurés pour être dans un état bloqué lorsque le bras principal est actif dans le mode nominal et dans un état passant lorsque le bras principal est défaillant et que le bras de secours est devenu actif ;
- le convertisseur statique comprend
   un premier nombre N supérieur ou égal à deux de bras commutation principaux, un deuxième nombre K de bras de commutation de secours supérieur ou égal à deux, un même deuxième nombre K de circuit d'aiguillage, chaque circuit d'aiguillage étant associé à un bras de commutation principal distinct, le premier nombre N étant supérieur ou égal au premier nombre K, et
   chaque bras principal est de structure identique et comporte au moins une cellule de commutation électronique munie de moyens de commande associés, une première borne d'entrée et une deuxième borne d'entrée d'alimentation aptes à être raccordées respectivement à la première polarité et la deuxième polarité de la source électrique, une borne de sortie de phase raccordée à une cellule de commutation de sortie apte à être raccordée à une phase distincte de la charge électrique, chaque cellule de commutation étant configurée au travers de ses moyens de commande pour être active dans un mode nominal prédéterminé du convertisseur, et
   le convertisseur comprend pour chaque bras de conversion principal, une paire de composants d'isolement associée et formée d'un premier composant d'isolement et d'un deuxième composant d'isolement formant chacun un dipôle, le premier composant d'isolement et le deuxième composant d'isolement étant respectivement et directement raccordés à la première borne d'entrée et à la deuxième borne d'entrée, d'alimentation, du bras principal associé ; et
   chaque bras de secours comporte au moins une cellule de commutation électronique à semi-conducteurs munie de moyens de commande associés, une première borne d'entrée et une deuxième borne d'entrée d'alimentation, aptes à être raccordées respectivement à la première polarité et la deuxième polarité de la source électrique, une borne de sortie raccordée à une cellule de commutation de sortie ; et
   chaque circuit d'aiguillage associé à un bras principal est un multi-pôle électronique à semi-conducteurs comprenant K éléments de connexion, chaque élément de connexion est un thyristor lorsque la source de tension est à courant continu et une association de deux thyristors montés en tête-bêche lorsque la source de tension est à courant alternatif,
   chaque circuit d'aiguillage comprend des moyens de commande associés aux thyristors,
   chaque élément de connexion d'un même circuit d'aiguillage comporte une entrée connectée à la sortie d'un bras de secours différent et une sortie connectée à la première entrée du bras de commutation principal auquel le circuit d'aiguillage est associé.
   les moyens de commande des thyristors des circuits d'aiguillage sont configurés pour être dans un état bloqué lorsque les bras principaux auxquels il sont associés sont actifs ;
   les moyens de commande des thyristors des circuits d'aiguillage sont configurés de sorte que lorsqu'un bras de commutation principal quelconque connecté à un aiguilleur est défectueux, il est apte à être secouru par l'un quelconque des bras de secours non encore devenu actif ;
- le convertisseur est un onduleur apte à être connecté à une source de tension à courant continu et à délivrer à une charge électrique un courant alternatif sur au mois une phase,
   la première borne d'entrée et la deuxième borne d'entrée d'alimentation d'un bras principal sont aptes à être raccordées respectivement à une première polarité positive et une deuxième polarité négative de la source électrique ;
   chaque cellule de commutation d'un bras principal ou d'un bras de secours comprend une paire d'interrupteurs bidirectionnels en courant montés en série, chaque interrupteur bidirectionnel en courant étant formé par un interrupteur commandé et une diode associée montée en antiparallèle, chaque interrupteur commandé étant un élément compris dans l'ensemble formé par les thyristors, les transistors de type IGBT, les transistors de type MOS ;
   les moyens de commandes des cellules de commutation du ou des bras principaux sont configurés de sorte que le convertisseur fonctionne en onduleur sur une ou plusieurs phases ;
   le circuit d'aiguillage comporte un premier élément de connexion semi-conducteur unidirectionnel en courant non commandé et un deuxième élément de connexion semi-conducteur unidirectionnel en courant non commandé, le premier élément de connexion étant connecté en direct depuis la sortie du bras de secours à la première borne d'entrée du bras principal, le deuxième élément de connexion étant connecté en inverse depuis la sortie du bras de secours vers la deuxième borne d'entrée négative du bras principal ;
- le convertisseur est un hacheur apte à être connecté à une source de tension à courant continu et à délivrer à une charge électrique un courant continu sur au moins une phase de sortie,
   la première borne d'entrée et la deuxième borne d'entrée d'alimentation d'un bras principal sont aptes.à être raccordées respectivement à une première polarité positive et une deuxième polarité négative de la source électrique,
   chaque cellule de commutation d'un bras principal ou d'un bras de secours comprend un interrupteur bidirectionnel monté en série avec une diode ou un deuxième interrupteur, chaque interrupteur bidirectionnel en courant étant formé par un interrupteur commandé et une diode associée montée en antiparallèle, chaque interrupteur commandé étant un élément compris dans l'ensemble formés par les thyristors, les transistors de type IGBT, les transistors de type MOS ;
   les moyens de commandes des cellules de commutation du ou des bras principaux sont configurés de sorte que le convertisseur fonctionne en hacheur,
   le circuit d'aiguillage associé à un bras principal comprend un unique élément de connexion à semi-conducteurs configuré pour être unidirectionnel en courant, l'élément de connexion unidirectionnel étant connecté en direct depuis la sortie du bras de secours à la première borne d'entrée du bras de conversion principal associé ;
- le convertisseur est un convertisseur de la famille AC/AC apte à convertir de l'énergie électrique entre une source de tension à courant alternatif et à délivrer à une charge électrique un courant alternatif sur au moins une phase de sortie,
   la première borne d'entrée et la deuxième borne d'entrée d'alimentation d'un bras principal quelconque sont aptes à être raccordées respectivement à une première polarité positive et une deuxième polarité négative de la source électrique ;
   chaque cellule de commutation d'un bras principal ou d'un bras de secours comprend une paire d'interrupteurs bidirectionnels en courant montés en série, chaque interrupteur bidirectionnel en courant étant formé par un interrupteur commandé et une diode associée montée en antiparallèle, chaque interrupteur commandé étant un élément compris dans l'ensemble formé par les thyristors, les transistors de type IGBT, les transistors de type MOS ;
   les moyens de commandes des cellules de commutation du ou des bras principaux sont configurés de sorte que le convertisseur fonctionne en un convertisseur de tension de type AC/AC sur une ou plusieurs phases de sortie,
   le circuit d'aiguillage comporte un premier élément de connexion semi-conducteur bidirectionnel en courant et un deuxième élément de connexion semi-conducteur bidirectionnel en courant et en tension, le premier élément de connexion étant connecté entre depuis la sortie du bras de secours à la première borne d'entrée du bras principal, le deuxième élément de connexion étant connecté en inverse depuis la sortie du bras de secours vers la deuxième borne d'entrée négative du bras principal.

L'invention a également pour objet un procédé de mise en oeuvre de maintien en service d'un convertisseur statique tel que défini ci-dessus, caractérisé en ce qu'il comprend les étapes consistant en ce que :
- les moyens de commande des interrupteurs commandés des cellules de commutation des bras principaux sont configurés de sorte que le convertisseur statique fonctionne de manière nominale sur les bras principaux lorsque aucun des composants de puissance formant les bras principaux n'est défectueux,
- lorsqu'un défaut a lieu sur un interrupteur d'une cellule principale, tous les interrupteurs du bras principal auquel appartient l'interrupteur défectueux et reliés en série, sont mis en court-circuit pendant une durée t d'obtention de l'isolement du bras principal devenu défaillant, supérieure à une première durée t1 pour que le bras principal atteigne un état stable et permanent de conducteur à très basse impédance inférieure à quelques dizaines de milli-ohms, et inférieure à une deuxième durée t2 en dessous de laquelle l'intégrité des composants du bras principal défectueux est préservée ainsi que l'état conducteur atteint du bras principal défectueux,
- les interrupteurs de secours configurés dans la même configuration que celle des interrupteurs du bras principal défaillant sont connectés automatiquement par le circuit d'aiguillage du bras principal défectueux devenu un conducteur stable.

L'originalité du concept de l'invention repose sur une structure unique de circuit redondant en mode passif (redondance passive par circuit dormant) dont la connexion s'opère spontanément et très simplement pour suppléer à la défaillance d'un nombre quelconque de cellules de commutation actives connectées au seul circuit redondant. Cette connexion de secours exploite la propriété de première défaillance en court-circuit des puces de puissance auxquelles sont associées des diodes ou des thyristors d'aiguillage permettant de commuter spontanément du mode normal au mode secours. Cette innovation vise à simplifier les solutions habituelles de redondance par une complexité réduite et un surcoût faible. Le concept est susceptible de trouver un champ d'applications large pour les applications dites « sensibles » où sécurité de fonctionnement et continuité de service doivent être conciliées, sans surcoût excessif et à fiabilité globale maîtrisée.

L'invention sera mieux comprise à la lecture de la description qui va suivre, donnée uniquement à titre d'exemple et faite en se référant aux dessins sur lesquels :
- la figure 1 est un schéma électrique partiel d'un convertisseur statique compris parmi les convertisseurs de tension alternatif-alternatif (AC/AC), les onduleurs (DC/AC/) et le hacheurs (DC/DC/) selon l'invention ;
- la figure 2 est un schéma électrique d'une première forme de réalisation du convertisseur de la figure 1, celle d'un onduleur à sorties triphasées redondé par un bras de secours ;
- la figure 3 est un schéma électrique d'une variante de l'onduleur de la figure 2 ;
- la figure 4 est un schéma électrique partiel d'une variante de l'onduleur de la figure 3 ;
- la figure 5 est un schéma électrique d'une variante de l'onduleur de la figure 4 ;
- la figure 6 est un schéma électrique d'une deuxième forme de réalisation du convertisseur de la figure 2, celle d'un onduleur ayant des phases multi-niveaux ;
- la figure 7 est un schéma électrique d'une deuxième forme de réalisation du convertisseur de la figure 1, celle d'un hacheur monocellulaire redondé par un bras de secours,
- la figure 8 est un schéma électrique troisième forme de réalisation du convertisseur de la figure 1, celle d'un convertisseur statique à trois hacheurs parallèles monophasés du type décrit à la figure 7 avec un bras de secours mutualisé ;
- la figure 9 est un schéma électrique d'une variante du convertisseur de la figure 8;
- la figure 10 est un schéma électrique d'une quatrième forme de réalisation du convertisseur de la figure 1, celle d'un onduleur triphasé à tolérance de panne double ;
- la figure 11 est un schéma électrique d'une variante de l'onduleur de la figure10 ;
- la figure 12 est un schéma électrique d'une cinquième forme de réalisation du convertisseur de la figure 1, celle d'un convertisseur de tension AC/AC ;
- la figure 13 est un schéma électrique d'un redresseur multicellulaire utilisant le concept de l'invention alimenté par une source à courant triphasé ;
- la figure 14 est un schéma électrique d'un redresseur monocellulaire utilisant le concept de l'invention, alimenté par une source à courant monophasé ;
- la figure 15 est ordinogramme d'un procédé de maintien du fonctionnement du convertisseur de la figure 1.
- la Figure 16 est un schéma électrique d'un onduleur triphasé de type ANPC.

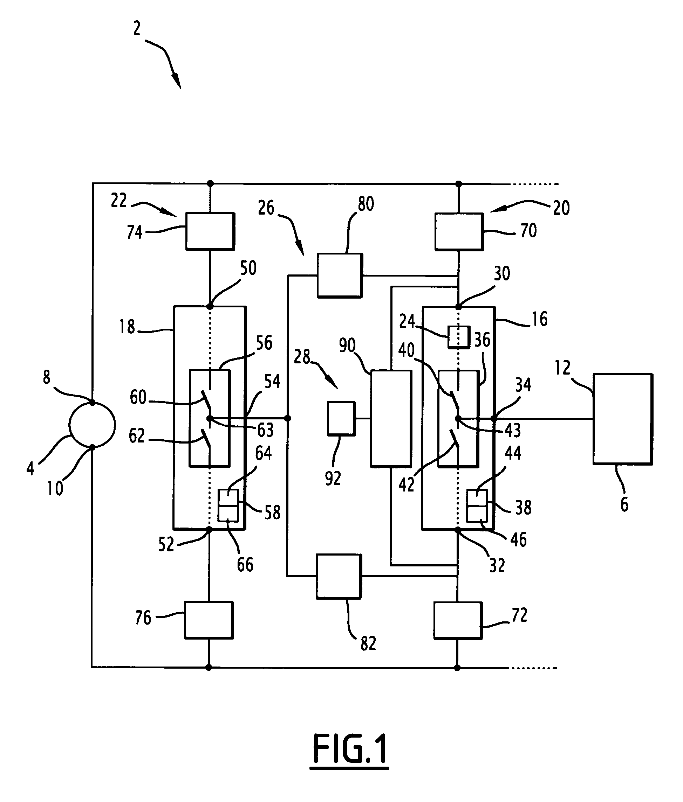

Suivant la figure 1, un convertisseur statique 2 est raccordé entre une source électrique 4 de tension et une charge électrique 6.

La source de tension 4 est soit une source de tension continue soit une source de tension alternative.

Lorsque la source de tension 4 est une source de tension continue, la charge 6 est ici alimentée par une tension alternative et dans ce cas le convertisseur statique de type DC/AC est dénommé onduleur.

Lorsque la source de tension 4 est une source de tension alternative, la charge 6 est ici alimentée par une tension alternative et dans ce cas le convertisseur statique est de type AC/AC.

En variante, lorsque la source de tension 4 est continue et que la charge 6 est alimentée par une tension continue dont le niveau est réglable, le convertisseur statique de type DC/DC et dénommé hacheur..

Le convertisseur statique 2 est branché en entrée à une première polarité 8 et une deuxième polarité 10 de la source électrique 4 et en sortie est connecté à au moins une borne électrique d'entrée 12 de la charge électrique 6.

Le convertisseur statique 2 comprend un bras principal de conversion statique 16, un bras de conversion statique de secours 18, une paire de composants d'isolement 20 associée au bras principal 16, une paire de composants d'isolement 22 associée au bras de secours 18, des moyens de détection et de localisation 24 d'un bras principal 16 défaillant, un circuit d'aiguillage 26 à semi-conducteurs et des moyens d'aide à l'isolement 28 du bras principal 16.

Le bras principal 16 de conversion statique comporte une première borne d'entrée d'alimentation 30 et une deuxième borne d'entrée d'alimentation 32 raccordées respectivement et indirectement à la première polarité 8 et à la deuxième polarité 10 de la source électrique 4 et une borne de sortie 34 raccordée à la borne d'entrée 12 de la charge électrique 6 et apte à délivrer un courant de sortie.

Le bras principal 16 comprend une cellule de commutation électronique à semi-conducteurs de sortie 36 munie d'un moyen de commande associé 38 et raccordée à la borne de sortie 34 du bras principal, et le cas échéant d'autres cellules de commutation représentées par des traits pointillés sur la figure 1 et munies de moyens de commande associés non représentés. Chaque cellule de commutation, y compris la cellule de commutation de sortie 36, est configurée au travers de ses moyens de commande associés pour être active dans un mode nominal prédéterminé du convertisseur statique 2.

De manière classique, une cellule de commutation électronique comprend deux interrupteurs électroniques, connectés entre une source de tension, ici la source 4, et une source de courant, ici la charge 6, dont un et un seul est commandé. Ces interrupteurs sont a priori quelconques et sur le plan de la commande, les interrupteurs d'une même cellule de commutation ne peuvent être ni ouverts ni fermés simultanément.

Ici, la cellule de commutation de sortie 36 comprend un premier interrupteur électronique 40 et un deuxième interrupteur électronique 42, reliés en série par un point milieu 43 connecté à la borne de sortie 34.

Le premier interrupteur 40 est connecté directement ou indirectement à la première borne d'entrée d'alimentation 30 opposée au point milieu 43 et à la borne de sortie 34.

Le deuxième interrupteur 42 est connecté directement ou indirectement à la deuxième borne d'entrée d'alimentation 32 opposée au point milieu 43 et à la borne de sortie 34.

Le premier interrupteur électronique 40 est un interrupteur commandé tandis que le deuxième interrupteur est soit commandé soit non commandé.

Un interrupteur commandé est un élément électronique à semi-conducteurs compris dans l'ensemble formé par les thyristors, les transistors de type IGBT (Insulated Gate Bipolar Transistor), les transistors de type MOS (Metal Oxide Silicon transistor), et les GTOs (Gate Turn Off transistor).

Lorsque le deuxième interrupteur 42 est commandé, le convertisseur est un onduleur.

Lorsque le deuxième interrupteur 42 n'est pas commandé, celui-ci est une diode, et le convertisseur est un hacheur.

Les moyens de commande 38 de la cellule de commutation de sortie 36 du bras principal se décomposent en de premiers moyens de commande 44 associés au premier interrupteur 40 et le cas échant de deuxièmes moyens de commande 46 associés au deuxième interrupteur 42.

Chaque cellule de commutation du bras principal 16 est apte à présenter un état stable et permanent ayant une impédance permanente stable inférieure à quelques dizaines de milli-ohms lorsque le bras de conversion a subi une défaillance consécutive à un emballement thermique ou un court-circuit d'un de ses composants semi-conducteurs, et qu'il a été mis provisoirement en court-circuit entre les bornes de la source de tension. Ainsi, après une première défaillance non souhaitée sur un premier composant de puissance du bras principal et une cascade de défaillances ultérieures souhaitées sur les composants de puissance du bras reliés en série entre la première borne d'entrée et la deuxième borne d'entrée, le bras principal défaillant est apte à devenir une ligne conductrice de puissance.

Le bras de conversion statique de secours 18 peut avoir une structure identique à celle du bras principal 16 ou une structure réduite au strict minimum avec le minimum de composants assurant la conversion requise, afin de ne pas dégrader la fiabilité et apporter un surcoût. En effet, la redondance étant passive, il convient de simplifier au maximum sa structure car elle est inactive en fonctionnement normal du convertisseur.

Le bras de conversion statique de secours 18 comprend une première borne d'entrée d'alimentation 50, une deuxième borne d'entrée d'alimentation 52, une borne de sortie 54, une cellule de commutation électronique à semi-conducteurs de sortie 56 munie de moyens de commande associés 58, et le cas échéant d'autres cellules de commutation représentées par des traits pointillés sur la figure 1 et munies de moyens de commande associés non représentés.

La cellule de commutation de sortie 56 du bras de secours 18 comprend un premier interrupteur électronique 60 et un deuxième interrupteur électronique 62 reliés en série par un point milieu 63.

Le premier interrupteur 60 est connecté directement ou indirectement à la première borne d'entrée d'alimentation 50 opposée au point milieu 63 et à la borne de sortie 54.

Le deuxième interrupteur 62 est connecté directement ou indirectement à la deuxième borne d'entrée d'alimentation 52 opposée au point milieu 63 et à la borne de sortie 54.

Les moyens de commande 58 de la cellule de commutation de sortie 56 se décomposent en des premiers moyens de commande 64 associés au premier interrupteur 60 et des deuxièmes moyens de commande 66 associés au deuxième interrupteur 62.

Les moyens de commande de la ou des cellules de secours formant le bras de secours 18 sont aptes à être mis en oeuvre après l'isolement du bras de conversion principal 16 devenu défaillant pour remplacer partiellement ou en totalité le bras principal 16.

Les éléments composant le bras de secours 18 décrits ci-dessus sont interconnectés entre eux, et connectés à la source 4 et à la charge 6 de manière analogue aux éléments composant le bras principal de conversion 16.

La paire de composants d'isolement 20, associée au bras principal de conversion 16, est formée d'un premier composant d'isolement 70 et d'un deuxième composant d'isolement 72 formant chacun un dipôle passif. Le premier composant d'isolement 70, le deuxième composant d'isolement 72 respectivement, est directement connecté entre la première polarité 8 de la source 4 et la première borne d'entrée 30 du bras principal 16, respectivement la deuxième polarité 10 de la source 4 et la deuxième borne d'entrée 32 du bras principal 16.

Les composants d'isolement 70, 72 du bras principal sont dimensionnés de sorte à isoler le bras principal après l'écoulement d'une première durée temporelle t1 pour l'établissement d'un mode de défaillance à faible impédance stable sur la ou les cellules de commutation formant le bras de commutation principal 16 et avant l'écoulement d'une deuxième durée temporelle t2 pour éviter la création d'une ouverture de circuit sur le bras de commutation principal 16.

La paire de composants d'isolement 22, associée au bras de secours 18, est formée d'un premier composant d'isolement 74 et d'un deuxième composant d'isolement 76 formant chacun un dipôle passif. Le premier composant d'isolement 74, le deuxième composant d'isolement 76 respectivement, est directement connecté entre la première polarité 8 de la source 4 et la première borne d'entrée 50 du bras de secours 18, respectivement la deuxième polarité 10 de la source 4 et la deuxième borne d'entrée 52 du bras de secours 18.

Un composant d'isolement est un composant compris dans la famille constituée par les fusibles, les disjoncteurs électroniques, les sectionneurs-rupteurs et une combinaison quelconque de ces derniers.

Les moyens de détection et de localisation 24 d'un bras principal 16 défaillant sont aptes à détecter un bras défaillant et la localisation du bras défaillant.

Diverses formes de réalisation des moyens de détection et de localisation 24 existent.

Par exemple, les moyens de détection et de localisation 24 d'un bras principal défaillant comprennent des percuteurs des fusibles 70, 72 et une électronique d'interfaçage vers les moyens de commande 58 du bras de secours 18. Un percuteur permet d'actionner mécaniquement un contact électrique auxiliaire de façon simple et économique.

Une autre manière de réaliser les moyens de détection est l'utilisation des signaux « drapeau de défaut » (en anglais « Flag default ») fournis par des protections de court-circuit implantées sur les cartes drivers des interrupteurs disponibles dans le commerce. Un signal bas niveau de type « Drapeau » (en anglais « Flag ») électriquement isolé, change de niveau de façon permanente lorsqu'un défaut est détecté au travers d'une variation caractéristique d'un courant d'un dispositif de pilotage (en anglais « driver »), et permet une interface simple et économique avec les moyens de commande des interrupteurs du bras de secours. Il est à remarquer que la tendance actuelle va vers des protections totalement programmables par des gabarits en termes de seuillage temps-amplitude Vcesat, avec une plus grande immunité aux parasites dans les phases de commutation, Vcesat désignant la tension collecteur-émetteur du dispositif de pilotage en saturation..

Dans une autre forme de réalisation, les moyens de détection et de localisation 24 d'un bras principal défaillant sont un circuit comprenant un diviseur de tension, un détecteur à diodes, un transistor ou comparateur, et un opto-coupleur agissant comme interface d'entrée aves les moyens de commande des interrupteurs du bras de secours. Un tel circuit est apte à détecter simplement une forme d'onde anormale au niveau de la cellule de commutation par la comparaison et un seuillage amplitude - temps entre le signal de commande de la cellule de commutation surveillée du bras principal et la tension de sortie instantanée de la cellule de commutation.

En variante, dans le cas d'un convertisseur statique où le bras principal à secourir est fixé, par exemple dans le cas où le convertisseur comprend un unique bras principal de conversion, les moyens de détection et localisation 24 du bras défaillant sont omis et les moyens de commande des interrupteurs du bras de secours 18 sont actifs pendant le fonctionnement normal actif du bras principal, en étant configurés de manière identique.

Le circuit d'aiguillage 26 comprend au moins un élément de connexion connecté entre la sortie 54 du bras de secours et une borne d'entrée du bras principal 16 parmi la première borne d'entrée 30 et la deuxième borne d'entrée 32 du bras principal 16. L'élément de connexion est compris dans l'ensemble des éléments à semi-conducteurs constitué par les diodes, les thyristors, l'association de deux thyristors montés en tête-bêche et les thyristors.

Chaque élément de connexion est configuré pour être dans un état bloqué lorsque le bras principal est actif dans un mode normal de fonctionnement, c'est-à-dire sans défaillance sur le bras principal.

Chaque élément de connexion est configuré pour être dans un état passant lorsque le bras principal est défaillant et que le bras de secours est devenu actif.

Sur la figure 1, le circuit d'aiguillage 26 comporte un premier élément de connexion 80 et un deuxième élément de connexion 82.

Le premier élément de connexion 80 est connecté directement entre la borne de sortie 54 du bras de secours 18 et la première borne d'entrée 30 du bras principal 16..

Le deuxième élément de connexion 82 est connecté directement entre la borne de sortie 54 du bras de secours 18 et la deuxième borne d'entrée 32 du bras principal 16..

La configuration de la figure 1 à deux éléments de connexion est celle d'un circuit d'aiguillage convenant à un onduleur DC/AC ou à un convertisseur de type AC/AC.

Dans le cas d'un onduleur, le circuit d'aiguillage 26 est par exemple formé de deux diodes.

Dans le cas d'un circuit de type AC/AC, le circuit d'aiguillage 26 est par exemple une paire de deux associations de thyristors montés en tête-bêche.

En variante, les deuxièmes interrupteurs du bras principal et du bras de secours sont des diodes et le deuxième élément unidirectionnel est omis. Cette configuration correspond à celle d'un ou plusieurs hacheurs en parallèle.

En variante, la paire de composants d'isolement associée au bras de secours est omise.

Les moyens d'aide à l'isolement 28 du bras principal 16 comprennent un thyristor auxiliaire 90 d'aide à l'isolement du bras principal de conversion 16, branché en parallèle à la première borne d'entrée 30 et à la deuxième borne d'entrée 32 du bras principal 16, et des moyens de commande 92 du thyristor auxiliaire 90 d'aide à l'isolement.

Les moyens de commande 92 du thyristor auxiliaire sont configurés de sorte que si le bras de commutation principal 16 lorsqu'il devient défaillant n'est pas symétriquement isolé par la paire de composants d'isolation qui lui est associée, il crée un court-circuit aux bornes de la charge 8 afin de provoquer l'isolation symétrique par les deux composants d'isolation, notamment lorsque les composants d'isolation sont des fusibles.

Sur le plan de la sécurité de fonctionnement du convertisseur statique, la situation critique ou la panne critique correspond à la mise en court-circuit de la source de tension 4 à courant continu (VDC). Cette situation peut apparaître de deux manières : la première, de façon externe par une commande défaillante d'un ou de plusieurs des moyens de commande du bras principal 16 amenant la mise en conduction de deux interrupteurs d'une même cellule de commutation, par exemple les deux interrupteurs 40 et 42 de la cellule 36 et pendant un temps suffisamment long pour provoquer l'emballement thermique et la défaillance en cascade des deux interrupteurs électroniques sous forme de puces ; la seconde, de façon interne par la défaillance initiale d'une des interrupteurs de puissance (transistor ou diode en régime d'avalanche ou d'emballement thermique, court-circuit de la charge 6 ou défaut « franc » d'isolement à la terre) provoquant à son tour la mise en court-circuit de l'interrupteur homologue, sa défaillance, puis la mise en court-circuit de la source 4 VDC.

Sur la figure 1 le deuxième interrupteur 42 est homologue au premier interrupteur 40 de la cellule de sortie 36.

La mise en sécurité d'une cellule défaillante selon l'invention est obtenue en évitant le court-circuit « durable » de la source 4 VDC ainsi que le régime transitoire appliqué à la charge 6 raccordée à la source 4 VDC à travers le bras principal 16 défaillant.

La mise en sécurité comprend une étape consistant à limiter ce courant de court-circuit et à isoler spontanément le bras principal 16 par les deux composants d'isolement connectés aux deux polarités de la source de tension. De manière générale, la fonction d'isolement est réalisée sur deux voies pour isoler symétriquement le bras principal, simultanément et spontanément par fusible, ou par une commande en mode rupteur.

En mode fusible , il faut bien noter dans ce cheminement que la défaillance se produit en cascade des puces de puissance, quelle que soit son origine, et provoque un effet « levier » d'aide à la disjonction (en anglais « crow-bar »), i.e. un défaut complet et symétrique de la cellule, exploité ici pour déclencher spontanément les deux fusibles sur les deux pôles. La technologie de ces fusibles n'est pas détaillée ici. Ces fusibles peuvent être, soit externes aux composants formant les interrupteurs (fusible de type Protistor™, fusible de barre de bus (en anglais « busbar fuse ») et au bras principal 16 (solution non invasive et optionnelle), soit intégrés au sein des composants (connexion elle-même fusible, fusible à petite puce (en anglais « little chip fuse »), fusible monté sur DBC (en anglais « Direct Bonding Copper ») et autre substrat, ...) ou réalisés directement sur le DBC par usinage mécanique, par ablation laser ou par photolithographie.

Pour jouer son rôle, cette étape d'isolement doit être suffisamment rapide, c'est-à-dire avoir un temps de mise en oeuvre de l'isolement effectif du bras principal inférieur à la deuxième durée t2 pour éviter toute rupture de la connexion filaire interne aux composants et tout risque d'explosion de l'encapsulant (risque de surtension excessive et de projection de métal, résine à haute température) amenant un circuit ouvert non souhaité. Néanmoins, la présence des moyens d'aide à l'isolement 28 du bras principal 16, par exemple réalisé sous la forme du thyristor auxiliaire 90 et de diodes du bras principal 16 non représentées sur la figure 1 permettent dans ce cas d'offrir un chemin de conduction en mode secours même si le interrupteurs du bras principal sont en circuit ouverts suite à un défaut de type « circuit ouvert » ou bien à des fusibles incorrectement dimensionnés.

Un autre mode d'isolement existe pour contourner le risque d'échec à l'isolement entre les temps t1 et t2. Il consiste à ouvrir le bras juste après t1 par l'interrupteur homologue au défaut et par sa protection de court-circuit sur son moyen de pilotage (dénommé driver en anglais). Le bras principal 16 se trouve ainsi dans un état de défaut asymétrique et pour atteindre l'état d'isolement symétrique il est alors nécessaire d'allumer le thyristor 90 qui permet une conduction de secours par lui-même et les diodes du bras principal 16.

Les caractéristiques en I²T et pouvoir de coupure des fusibles sont déterminées de façon à garantir que la durée d'établissement de l'isolement du bras t est inférieure à la deuxième durée.

Si cette condition de sélectivité définie par le respect de la durée d'isolement inférieure à la deuxième durée t2 est remplie, les puces défaillantes du bras principal peuvent se présenter dans un état résistif de très faible valeur (par expérience de qqs mΩ à qqs dizaines de mΩ) dépendant de la densité d'énergie dissipée dans la zone de défaut des puces et des caractéristiques technologiques qui environnent les puces et de la durée t d'isolement du bras principal.

Le type de métallisation, par exemple une couche d'aluminium ou d'alliages en connexion « cuivre planaire couche épaisse » tels que des alliages aluminium-silicium, aluminium-cuivre, aluminium-titane-cuivre, l'épaisseur de métallisation, le type d'interconnexion (par exemple connexion par fils soudés (en anglais « wire-bonding »), connexion par ruban, connexion par tamponnage (en anglais « bump»), connexion par micro-poteau, connexion par grille de connexion (en anglais « lead-frame »), connexion par billes d'un réseau de billes (en anglais « flip-chip BGA »)), par couche de cuivres (contact par électrodéposition ou la technique Overlay - GE (donner le sens de l'acronyme GE), les dimensions de l'interconnexion, le type de report (puce brasée ou pressée) et le type d'encapsulation (dans de la résine massive ou dans un gel silicone) vont également influencer la stabilité dans le temps de cette résistance de défaut de la ligne de puissance du bras principal conductrice ainsi formé si cette ligne conductrice du bras principal 16 est amenée à assurer une fonction de conduction de secours.

Une durée minimale de court-circuit du bras principal c'est à dire la première durée t1 doit également être garantie de façon à ce que la génération du mode de défaillance à faible impédance stable et permanente des puces défaillantes ait eu le temps de s'établir.

En d'autres termes, en mode fusible notamment, la durée d'établissement de l'isolement t par les fusibles 70, 72 doit être supérieure à la première durée t1 correspondant à la durée minimale requise pour la réalisation d'un état basse impédance de la totalité des puces en série du bras principal et inférieure à la deuxième durée t2.

Ainsi, l'exploitation de ce mode de défaillance « en très basse impédance » des puces défaillantes du bras principal 16 permet d'assurer une poursuite de la mission du convertisseur par une connexion originale « en série » du bras de secours 18 en redondance passive, c'est-à-dire non sollicitée pendant le fonctionnement actif normal du bras principal mais devant supporter la tension à l'état bloqué.

La disposition des deux composants d'isolement associés au bras principal sur les deux polarités de la source 4 et la disposition des éléments de connexion du circuit d'aiguillage en branchement direct sur les bornes des fusibles opposées aux polarités de la source offrent l'avantage de pouvoir connecter spontanément le bras de secours à la borne de sortie du bras principal, simplement par l'intermédiaire de deux éléments de connexion simples dans leur structure et dans leurs moyens auxiliaires de commande, et des puces défaillantes du bras principal secouru elles-mêmes.

De manière préférée, en fonctionnement normal du convertisseur, c'est-à-dire lorsqu'il n'y a pas de panne, les moyens de commande 58 des interrupteurs du bras de secours 18 sont configurés de sorte que le bras de secours est placé dans un état de veille avec le minimum de contrainte sur les composants de puissance.

Par exemple, les moyens de commande 58 des interrupteurs du bras de secours 18 sont configurés de sorte que ses transistors et ses diodes sont maintenus dans un état statique bloqué.

Ainsi, en mode passif, tous les composants dormants du bras de secours, y compris le circuit d'aiguillage, se partagent la tension commune de la source 4 et ne supportent qu'une tension réduite de moitié VDC/2 filtrée par le bus d'amenée de la source et donc dépourvue de variation de tension par rapport au temps, désignée par dv/dt. Le courant de fuite dont les composants seront le siège sera donc réduit en évitant le risque d'emballement thermique statique si une température de boîtier venait à être élevée. Par ailleurs, en mode secours, les éléments de connexion conduisent chacun leur tour le courant de charge sans aucun stress de commutation. Dans le cas d'un fonctionnement en onduleur ou en hacheur du convertisseur des diodes de redressement classiques sont donc tout à fait appropriées pour remplir la fonction des éléments de connexion du circuit d'aiguillage, lesquelles diodes de connexion possèdent en prime un courant de fuite et un niveau d'emballement thermique plus favorables que des diodes de commutation à même calibre.

Pour être viable, un tel fonctionnement doit reposer sur des choix technologiques permettant d'assurer une faible résistance de défaut à un courant significatif et de manière permanente sur une durée significative.

Dans le cadre d'applications reposant sur un mode de redondance active intégrée, des technologies à métallisation épaisse, à tamponnage (« bumps » en anglais) ou puce pressée ont été développées. Elles sont très favorables et exploitent également la propriété de faible impédance d'une puce défaillante. Ces technologies sont applicables à l'invention.

Il est à remarquer que la technologie à connexion par fils soudés (en anglais wire-bonding) en cours d'évaluation pour les deux types d'encapsulant que sont la résine massive et le gel silicone a déjà fourni des résultats prometteurs.

Dans le cas où les caractéristiques technologiques ne sont pas réunies pour garantir une conduction viable des puces défaillantes, l'ajout du thyristor auxiliaire 90 permet d'une part, une aide partielle ou complète à l'isolement des bornes de polarité de la source 4, et d'autre part, une connexion en série par des diodes du bras principal défaillant en redondance et en parallèle avec les transistors défaillants. Cette stratégie suppose que les diodes ne soient pas défaillantes ou, plus concrètement, que leur taux de défaillance soit nettement plus faible que celui des transistors sur la durée de fonctionnement considérée. L'ajout de ce thyristor auxiliaire permet également de suppléer à la défaillance de la chaine de commande rapprochée des transistors (absence de commande, commande dégradée ou commande erratique) ce qui élargit le domaine d'intérêt.

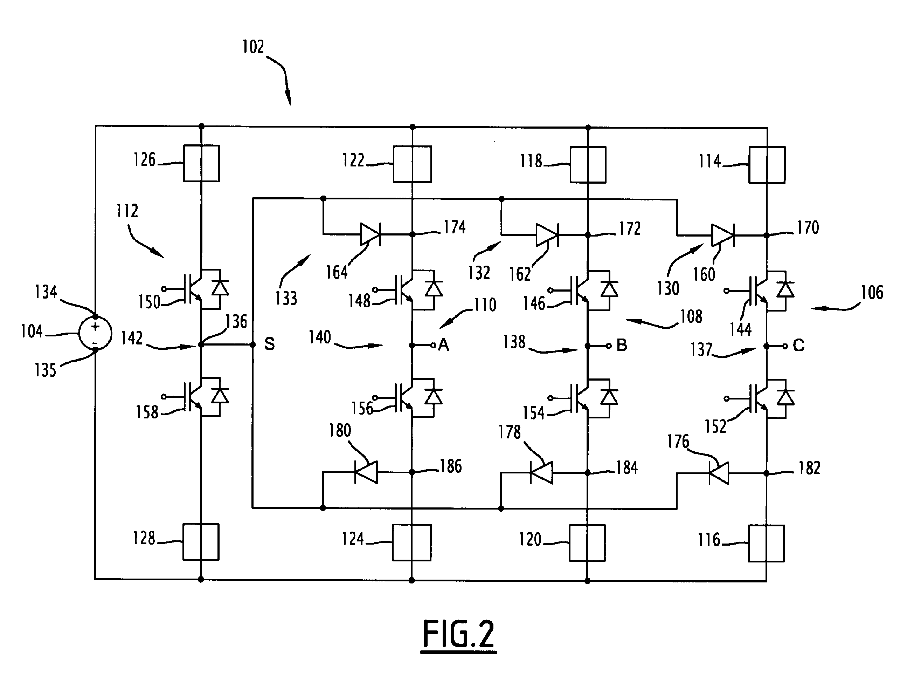

Suivant la figure 2, le convertisseur statique est un onduleur triphasé 102 connecté entre une source 104 de tension continue et une charge à entrées triphasées non représentée.

L'onduleur 102 comprend trois bras principaux 106, 108, 110 de conversion statique et un bras de secours 112 de structure identique.

L'onduleur comprend également des composants d'isolement 114, 116, 118, 120, 122, 124, 126, 128 qui sont ici des fusibles et qui sont associés deux à deux en quatre paires distinctes, et trois circuits d'aiguillage 130, 132, 133.

Chaque bras principal 106, 108, 110 est connecté entre une unique borne de polarité positive 134 et une unique borne de polarité négative 135 de la source 104 au travers d'une paire respective différente de fusibles, les fusibles 114, 116 pour le bras 106, les fusibles 118, 120 pour le bras 108, et les fusibles 122, 124 pour le bras principal 110.

Le bras de secours 112 est connecté entre la borne de polarité positive 134 et la borne de polarité négative 135 de la source 104 au travers de la paire de fusibles 126, 128 et comprend une borne de sortie 136.

Chaque bras principal 106, 108, 110 et le bras de secours 112 comprennent respectivement une unique cellule de commutation 137, 138, 140, 142 à deux niveaux de tension de structure identique.

Chaque cellule de commutation 137, 138, 140, 142 comprend une association série d'un premier interrupteur 144, 146, 148, 150 et d'un deuxième interrupteur 152, 154, 156, 158.

Les interrupteurs 144, 146, 148, 150, 152, 154, 156, 158 sont formés chacun d'une association d'un transistor et d'une diode de redondance montée en antiparallèle.

Les moyens de commande des transistors ne sont pas représentés sur la figure 2.

Chaque circuit d'aiguillage 130, 132, 133 est associé respectivement à un unique bras principal différent 106, 108, 110 et comprend une première diode 160, 162, 164 connectée en direct depuis la borne de sortie 136 de la cellule de commutation 142 du bras de secours 112 jusqu'à un point de connexion 170, 172, 174 respectif. Chaque point de connexion 170, 172, 174 relie respectivement la cellule de commutation associée 137, 138, 140 au fusible associé respectif 114, 118, 122, connecté à la borne de polarité positive 134.

Chaque circuit d'aiguillage 130, 132, 133 comprend une deuxième diode 176, 178, 180 connectée en direct depuis un point de connexion 182, 184, 186 associé jusqu'à la borne de sortie 136 de la cellule de commutation 142 du bras de secours 112. Chaque point de connexion 182, 184, 186 relie respectivement la cellule de commutation associée 137, 138, 140 au fusible associé 116, 120, 124, connecté à la borne de polarité négative 135.

Cette configuration convient parfaitement lorsque les modes de défaillances des interrupteurs et leurs réponses électriques associées combinées aux performances des fusibles permettent une isolation symétrique d'un bras principal quelconque.

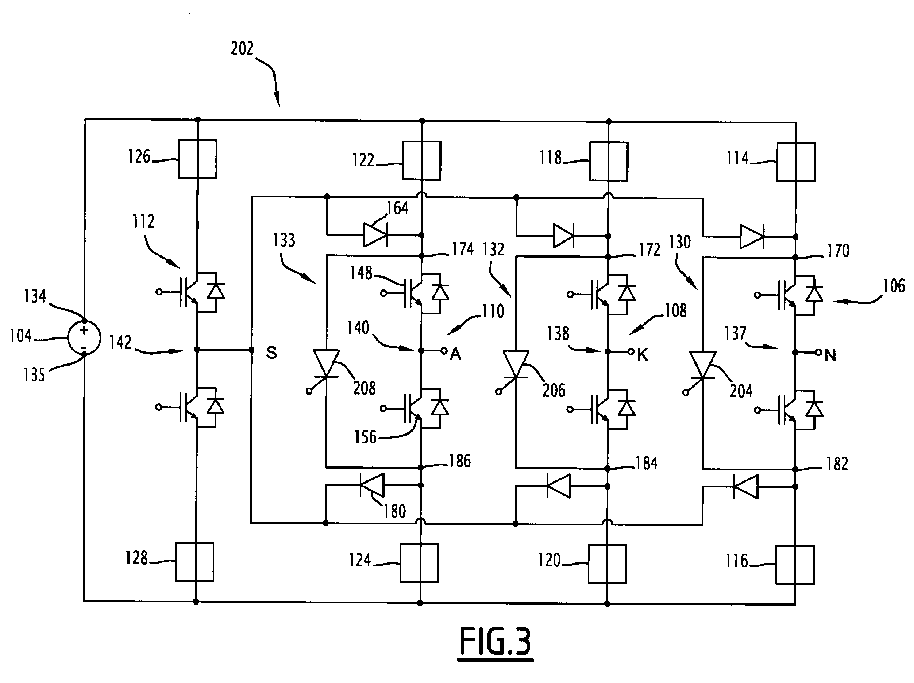

Suivant la figure 3, une variante de l'onduleur 102 est un onduleur 202 comprenant les mêmes composants, désignés par des références identiques, et le même agencement de ces composants.

L'onduleur comprend en outre trois thyristors auxiliaires 204, 206, 208 d'aide à l'isolement d'un bras principal avec des moyens de commande associés non représentés, chaque thyristor auxiliaire 204, 206, 208 étant associé à un unique bras principal de conversion différent 106, 108, 110.

Chaque thyristor auxiliaire 204, 206, 208 est branché respectivement entre les points de connexion 170 et 182, 172 et 184, 174 et 186.

A titre d'exemple, un isolement non symétrique du bras de conversion principal 133 a lieu où seul le fusible 122 par fusion a ouvert le circuit du bras principal du côté de la borne de polarité positive 134 et où le bras principal reste connecté à la borne de polarité négative 135 au travers du fusible 124 non fondu. Le défaut ayant été détecté et localisé au préalable sur le bras 133, le thyristor 208 est alors commandé à l'état passant de sorte que le fusible 124 est court-circuité en permanence soit au travers de la diode 180, soit au travers de la diode 164, du thyristor auxiliaire 208, montés en série, pour fondre et obtenir finalement l'isolation symétrique du bras principal 133.

En outre, le bras 133 étant isolé complètement, les deux diodes montées chacune sur un transistor associé 148, 156 et le thyristor assure un chemin de conduction entre la sortie désignée par S de la cellule de commutation 142 de secours et la borne de phase désignée par A de la charge.

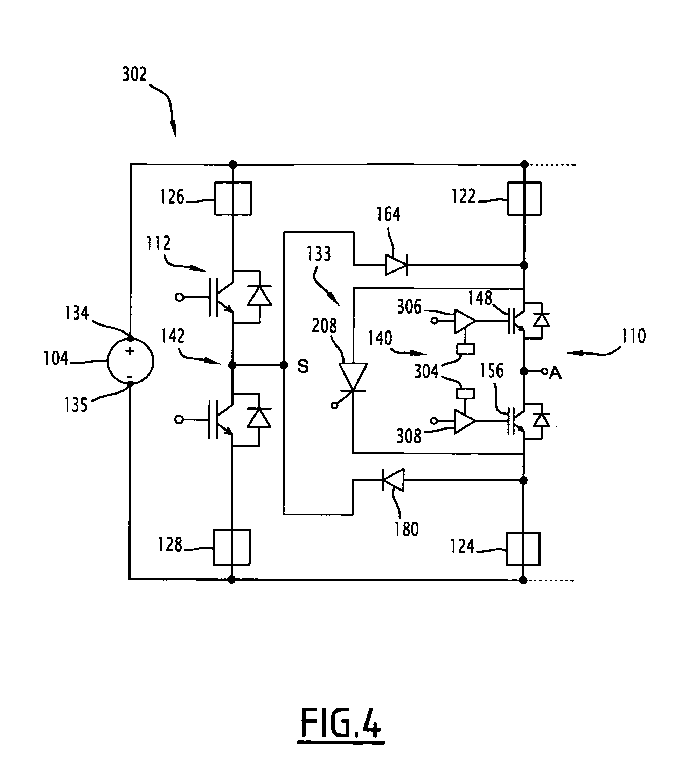

Suivant la figure 4, une variante de l'onduleur 202 est un onduleur 302 dans lequel chaque bras principal comprend un dispositif de protection à disjonction rapide 304 intégré à deux unités de pilotage 306, 308, dénommées en anglais « drivers », des puces à transistors commandées de la cellule de commutation associée au bras principal.

Ainsi, s'il apparaît une difficulté ou un risque de protection non sélective entre les fusibles et les faisceaux de liaisons des puces dans le mode levier (en anglais « crowbar »), en raison d'un I²t trop faible ou bien d'une résistance de défaut d'un transistor défectueux insuffisamment maîtrisée, il peut être judicieux d'opérer un isolement en deux phases.

Dans une première phase d'isolement asymétrique de la cellule de commutation, par exemple la cellule désignée par 140, la cellule de commutation défectueuse 140 est isolée à l'aide de la protection du disjoncteur rapide 304 intégrée aux deux unités de pilotage 306, 308 des puces à transistor.

Dans une deuxième phase d'isolement successive à la première phase, symétrique cette fois et à travers une maille différente, la cellule de commutation est isolée à l'aide du thyristor auxiliaire.

La connexion de secours se fait préférentiellement par les diodes de redondance afin de maintenir les transistors dans un état bloqué compatible avec le mode disjoncteur.

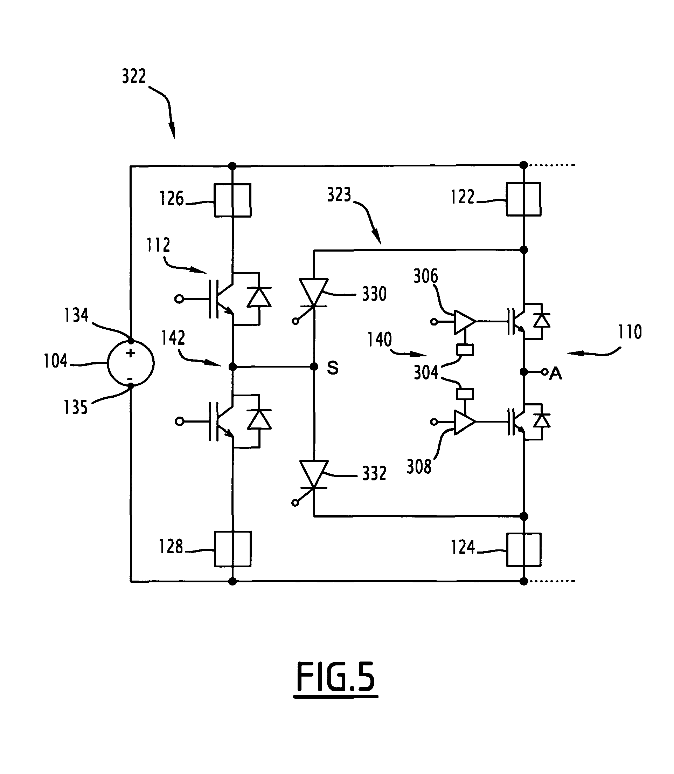

Suivant la figure 5, une variante 332 de l'onduleur 302 décrit à la figure 4 est décrite dans laquelle, pour chaque bras principal, les deux diodes de connexion sont remplacées chacune par un thyristor et le thyristor d'aide à l'isolement du bras est supprimé.

Par exemple, dans le nouveau bras principal 323 seul bras principal représenté sur la figure 5 et remplaçant le bras principal 133 de la figure 4, les diodes 164, 180 sont remplacées par deux thyristors 330, 333 reliés en série dans le même sens de montage que le thyristor de 208 de la figure 4, l'ensemble série ainsi formé étant branché en parallèle entre les deux fusibles 122 et 124.

Le thyristor d'aide à l'isolement 208 est supprimé.

Ainsi agencé, les deux thyristors 330 et 332 assurent les fonctions de connexion d'aiguillage et d'aide à l'isolement du bras principal 323, permettant d'économiser un composant électronique de puissance.

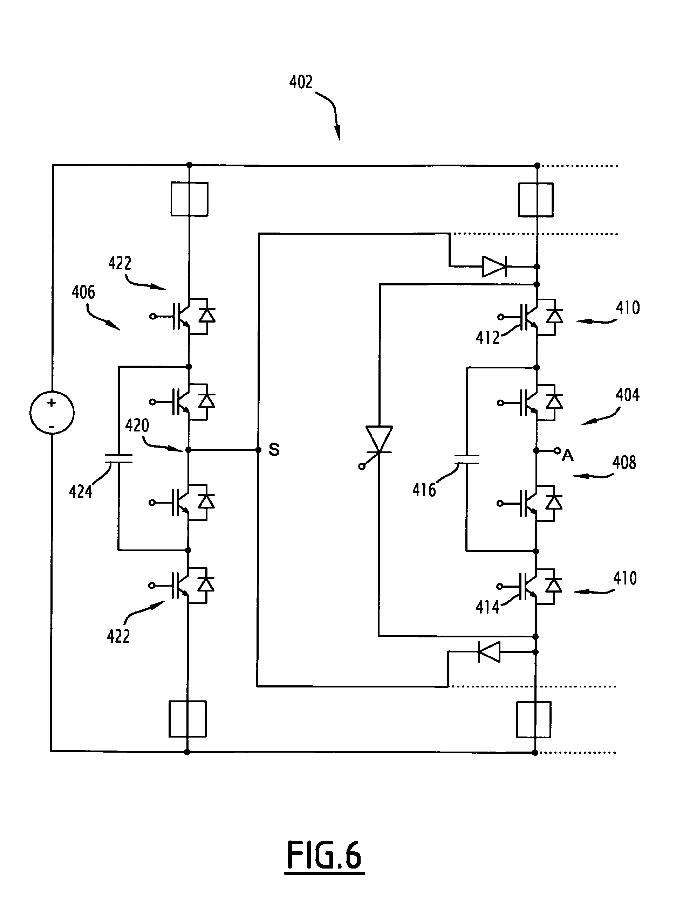

Suivant la figure 6, en variante aux onduleurs des figures 2, 3, 4 et 5, un onduleur 402 est un onduleur multi-niveaux à cellules de commutation imbriquées, et comprend au moins un bras principal 404 et un bras de secours 406 de structures identiques.

Chaque bras principal de conversion statique est une macro-cellule, à deux-niveaux de tension ou plus, quelle que soit sa structure interne, tant que celle-ci ne possède que deux pôles de connexion côté continu.

Ici sur la figure 5, le bras principal 404 comprend deux cellules de commutation imbriquées, une première cellule interne 408 de structure identique à une cellule de commutation de l'onduleur 202 décrit à la figure 3, et une deuxième cellule externe 410 composée de deux interrupteurs 412, 414 connectés à la cellule interne 408 en l'encadrant.

Les interrupteurs des deux cellules de commutation 412, 414 sont reliés en série, et une capacité 416 faisant partie du bras principal 404 est banchée en parallèle de la cellule de commutation interne 408, celle-ci formant également la cellule de commutation de sortie du bras principal 404.

Ici, le bras de secours 406 comprend à l'instar du bras principal deux cellules de commutation imbriquées, une cellule interne 420 et une cellule externe 422 et une capacité 424 branchée aux bornes de la cellule de commutation interne 420.

En variante, le bras de secours 406 comporte une seule cellule de commutation.

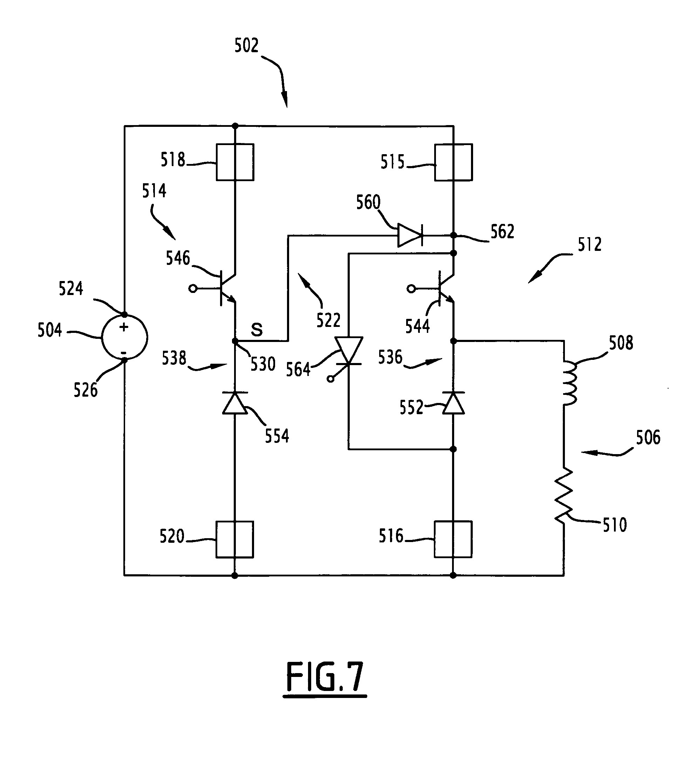

Suivant la figure 7, le convertisseur statique est un hacheur 502 dévolteur connecté entre une source de tension continue 504 et à une charge à entrée 506 de type bobinage d'un moteur par exemple, modélisée par une inductance 508 et une résistance 510 montées en série.

Le hacheur 502 comprend au moins un bras principal 512 de conversion statique et un bras de secours 514 de structure identique à celle du bras principal 512, un seul bras principal étant représenté sur la figure 6.

L'onduleur comprend également des fusibles 515, 516, 518, 520 associés deux à deux en deux paires distinctes et un circuit d'aiguillage 522.

Le bras principal 512 est connecté entre une unique borne de polarité positive 524 et une unique borne de polarité négative 526 de la source 504 au travers de la paire de fusibles 515 et 516.

Le bras de secours 514 est connecté entre la borne de polarité positive 524 et la borne de polarité négative 526 de la source 504 au travers de la paire de fusibles 518, 520 et comprend une borne de sortie 530.

Le bras principal 512 et le bras de secours 514 comprennent respectivement une unique cellule de commutation 536, 538 unidirectionnelle en courant de structure identique.

Chaque cellule de commutation 536, 538 comprend une association série d'un premier interrupteur 544, 546 et d'un deuxième interrupteur 552, 554, chaque premier interrupteur 544, 546 étant formé d'un seul transistor différent et chaque deuxième interrupteur 552, 554 étant formé d'une seule diode.

Les moyens de commande des deux transistors 544, 546 ne sont pas représentés sur la figure 6.

Le circuit d'aiguillage 522, associé au bras principal 512, comprend une diode 560 connectée en direct depuis la borne de sortie 530 de la cellule de commutation 538 du bras de secours 514 jusqu'au point de connexion 562 de la cellule de commutation au fusible 515 connecté à la borne de polarité positive.

Ainsi, contrairement au cas de l'onduleur décrit aux figures 2 à 5, la cellule de commutation 536 est unidirectionnelle en courant en étant constituée d'un seul transistor 544 et d'une seule diode 552 amenant, cette fois, un fonctionnement asymétrique en régime de défaut.

En effet, si la défaillance initiale de la diode provoque bien l'effet levier (« crow-bar » en anglais) recherché pour déclencher les deux fusibles 515, 516 sur les deux pôles à l'instar de l'onduleur, il n'en est pas de même si c'est le transistor 544 qui est initialement défaillant. La diode opposée 552 se bloque, isolant le défaut au sein de la cellule mais en laissant la charge 506 connectée en permanence à la source de tension 504 à courant continu. Dans le cas d'un défaut initial de charge en court-circuit, le fusible 515 isolera le bras principal 512 sans problème, par contre dans le cas d'un défaut initial sur le transistor 544 lui-même, il faudra un dimensionnement adapté du fusible pour assurer une protection vis-à-vis de la surcharge en courant dans la charge (comme cela existe d'ailleurs sur certain type de fusible de la marque Protistor™).

Si cette condition est remplie, le principe de redondance présenté pour l'onduleur peut être adapté directement au cas du hacheur.

Dans le cas contraire, un thyristor d'aide à l'isolement 564 est nécessaire pour provoquer l'isolement symétrique par les deux fusibles 515, 516.

A l'instar de l'onduleur décrit à la figure 3, le thyristor auxiliaire 564 offre aussi l'avantage d'un deuxième chemin de conduction ne mettant en jeu que la conduction de la diode 552 de la cellule de commutation 536, ce qui est utile si le mode de défaut du transistor est trop résistif ou bien si le défaut se traduit par une absence de commande sur le transistor 544.

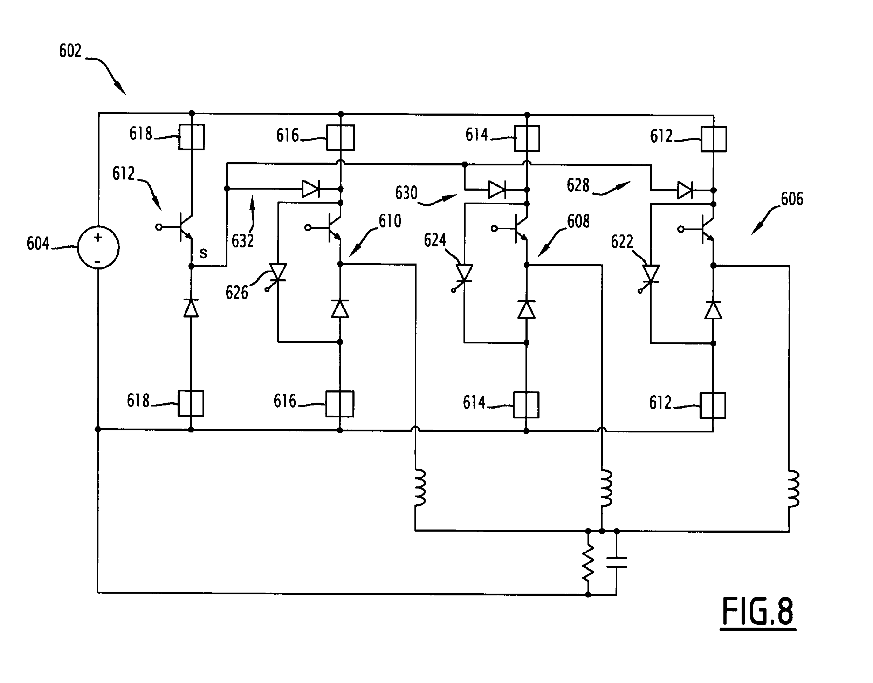

Suivant la figure 8, un convertisseur statique 602 à hacheurs en parallèle comprend au moins deux bras principaux de conversion connectés en parallèle sur une source de tension 604 à courant continu, ici trois bras principaux hacheurs 606, 608, 610 identiques chacun au bras principal du hacheur décrit à la figure 6.

Le convertisseur 602 comprend un bras de secours 612 identique à celui de la figure 6 et quatre paires de fusibles 612, 614, 616, 618, chaque bras principal 606, 608, 610 et le bras de secours 612 étant imbriqués dans une unique paire de fusibles différente.

De même, le convertisseur 602 comprend trois thyristors auxiliaires 622, 624, 626 d'aide à l'isolement, branchés chacun sur un seul bras différent, et trois circuits d'aiguillage 628, 630, 632 associés un par un à un bras principal différent.

A l'instar de l'onduleur polyphasé décrit à la figure 3, le bras de secours 612 est mutualisé à l'ensemble des cellules de commutation actives formant les bras principaux 606, 608, 610 et vient se connecter spontanément en série avec une cellule de commutation devenue défaillante pour secourir la phase concernée au travers de la diode du circuit d'aiguillage et éventuellement le thyristor auxiliaire servant alors d'élément d'aiguillage, selon le composant devenu défectueux sur la cellule de commutation devenue défaillante. Par exemple, si la cellule de commutation du bras principal 606 est devenue défaillante, le circuit d'aiguillage 628 et éventuellement le thyristor auxiliaire 622 permettront au bras de secours de se connecter spontanément en série à la cellule défaillante du bras principal 606.

Cette architecture de redondance assure une continuité de service sans dégradation des performances électriques dans le cas d'une défaillance d'un seul bras principal.

Il est à remarquer que dans le cas d'une connexion par inductances non couplées, le secours reste opérationnel si une deuxième défaillance apparaît sur une cellule quelconque. Les deux cellules défaillantes sont alors connectées en parallèle par leur diode auxiliaire et éventuellement leur thyristor auxiliaire ; il en est de même pour les inductances de liaison. Un déclassement (« derating » en anglais) en puissance doit alors être appliqué pour ne pas surcharger la cellule de secours et ne pas mettre en danger l'ensemble du convertisseur.

Dans le cas d'inductances couplées, la cellule de secours pourra assurer le maintien de la mission au premier défaut, a priori sans précaution supplémentaire. Au second défaut, le maintien d'une composante continue équilibrée du flux propre dans les deux inductances nécessiterait de maintenir les ampères-tours continus équilibrés et donc de doubler le courant dans la cellule de secours avec une surcharge de 100% dans cette cellule. Il semble plus judicieux de réduire de moitié la composante continue du courant dans les autres phases actives, i.e. un déclassement en puissance, afin de maintenir un état magnétique continu équilibré dans l'ensemble des inductances couplées, la cellule de secours étant dans ce cas utilisée à son courant nominal.

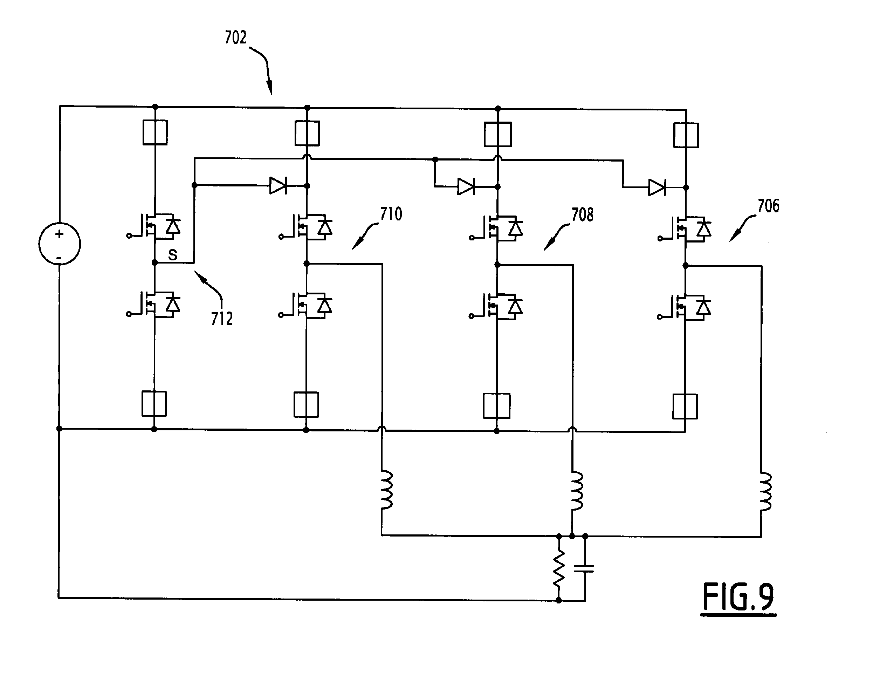

Suivant la figure 9, un convertisseur statique 702 d'architecture similaire à celle du convertisseur statique de la figure 7 est proposé dans le cas particulier d'une application basse-tension.

Le convertisseur comprend trois bras principaux de conversion 706, 708, 710 et un bras de conversion de secours 712.

Les interrupteurs des cellules de commutation de tous les bras 606, 608, 610, 612 de la figure 8 ont été remplacés par des interrupteurs de type MOS formés chacun d'une association d'un transistor de type MOS avec une diode montée en antiparallèle. Les thyristors auxiliaires ont été supprimés.

Ces interrupteurs peuvent favorablement être utilisés en conduction inverse dans la séquence de roue-libre (combinaison de la diode de corps et de la conduction inverse du canal). Les cellules de commutation disposent alors de deux transistors en série capables de déclencher les deux fusibles associés par effet crow-bar comme dans le cas d'un onduleur décrit à la figure 2. Les thyristors auxiliaires ne sont donc plus indispensables dans ce cas particulier.

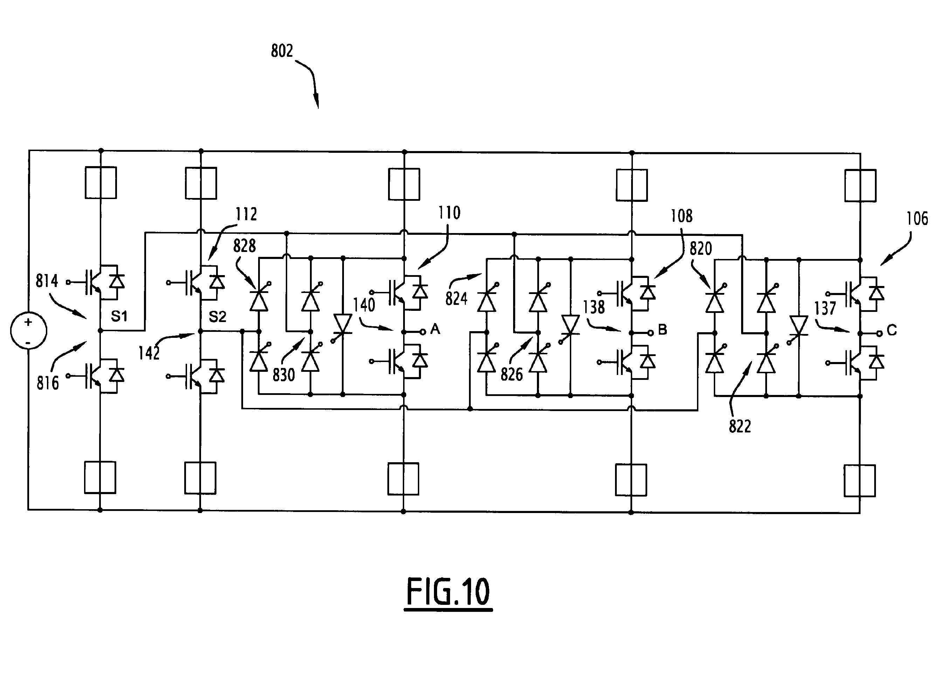

Suivant la figure 10, une architecture d'un onduleur triphasé 802 est proposée dans laquelle il est possible d'assurer une continuité de service dans le cas d'une panne double c'est-à-dire deux pannes réparties sur deux bras principaux différents.

En effet, dans les schémas précédents concernant les convertisseurs de type onduleur ou hacheur, chaque cellule de sortie active d'un bras principal de conversion actif possède son aiguilleur à diodes dont un point commun est relié à l'unique cellule de sortie du bras de secours mutualisée. Cette approche peut être considérée comme « minimaliste » dans la mesure où le nombre de composants additionnels est effectivement minimisé et l'absence d'électrode de commande sur ces composants est privilégiée pour des raisons de fiabilité et de surcoût même si les composants ajoutés sont dormants en redondance passive.

Néanmoins, cette relative simplicité se paye par l'absence d'une deuxième tolérance de panne. En effet au premier défaut, la borne de sortie du bras principal défaillant correspondant à une phase se retrouve alimentée par la cellule de sortie de secours à travers son aiguilleur, les autres aiguilleurs en parallèle étant toujours bloqués et isolant correctement les autres cellules en parallèle du premier défaut même si les diodes subissent les variations temporelles de la tension ou dv/dt de la cellule de sortie de secours. Au second défaut, sur une autre sortie d'un autre bras principal correspondant à une autre phase quelconque, le circuit d'aiguillage concerné vient connecter spontanément l'autre sortie à la même cellule de sortie de secours puisque celle-ci est commune à l'ensemble des sorties correspondant à des phases différentes réalisant ainsi la mise en parallèle des deux phases défaillantes à travers leurs aiguilleurs et composants défaillants respectifs. Il est difficile d'imaginer un fonctionnement triphasé viable dans ces conditions.

Toutefois, il a été vu qu'un fonctionnement avec charge parallèle est envisageable avec une architecture proposée à la figure 7, même si l'équilibrage des courants est à étudier au cas par cas et surtout de façon expérimentale. Ceci dit, dans la mesure où les résistances de défaut mesurées sur des puces défaillantes du type IGBT (Inverse Gate Bipolar Transistor) sont faibles par rapport à la résistance des diodes d'aiguillage en série, on peut s'attendre à ce qu'un équilibrage des courants soit assez bien réalisé.

L'architecture proposée suivant la figure 10 est une variante de celle de la figure 2 et permet une tolérance de deuxième panne dans tous les cas d'application.

La solution proposée consiste à insérer un second bras de secours 814, ici formé d'une cellule de secours unique. Pour pouvoir aiguiller un bras de secours quelconque parmi les deux bras 112, 814 vers n'importe qu'elle cellule active 137, 138, 140 formant un bras principal 106, 108, 110 de façon totalement indépendante, chaque cellule active principale 137, 138, 140, se voit doter de deux circuits d'aiguillage respectifs 820, 822 ; 824, 826 ; 828, 830 commandés en parallèle permettant l'aiguillage de la phase défaillante vers l'une ou l'autre des cellules de secours 142, 816.

Ce principe peut être généralisé à un convertisseur statique quelconque de N cellules de commutation actives équipées de K aiguilleurs connectés à K cellules en secours, avec N et K deux nombres entiers supérieurs ou égaux à 2 et K inférieur ou égal à N.

Ce principe peut également être généralisé à un convertisseur quelconque tel que décrit à la figure 1 comprenant un premier nombre N supérieur ou égal à deux de bras commutation principaux, un deuxième nombre K de bras de commutation de secours supérieur ou égal à deux, un même deuxième nombre K d'aiguilleurs, chaque aiguilleur étant associé à un bras de commutation principal distinct, le premier nombre N étant supérieur ou égal au premier nombre K.

Chaque aiguilleur est un multi-pôle électrique comprenant le deuxième nombre K d'éléments de connexion et des moyens de commande de thyristors associés, chaque élément de connexion d'un même aiguilleur étant un thyristor, chaque thyristor ayant une entrée connectée à la sortie d'un bras de secours unique et distinct et une sortie connectée à la première entrée du bras de commutation principal auquel l'aiguilleur est associé.

Les moyens de commande de thyristors des aiguilleurs sont configurés de sorte que lorsqu'un bras de commutation principal quelconque connecté à un aiguilleur est défectueux il est apte à être secouru par l'un quelconque des bras de secours non encore devenu actif.

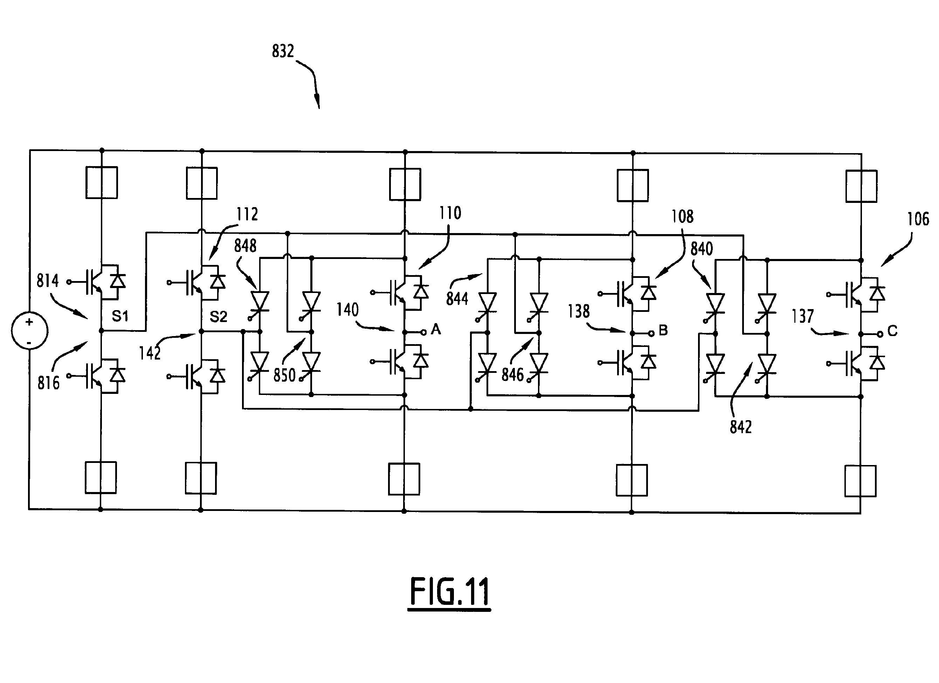

Suivant la figure 11, une variante du convertisseur de la figure 10 est proposée dans laquelle le sens de montage est inversé de tous les thyristors constituant les éléments de connexion des circuits d'aiguillage.

Les thyristors d'aide à l'isolation des bras principaux sont enlevés.

Ainsi, les éléments de connexion assurent-ils la même fonction d'aiguillage que celle décrite pour la figure 10 mais également la fonction d'isolation des bras principaux. Ainsi, l'économie est réalisée des thyristors d'aide à l'isolation ici au nombre de trois.

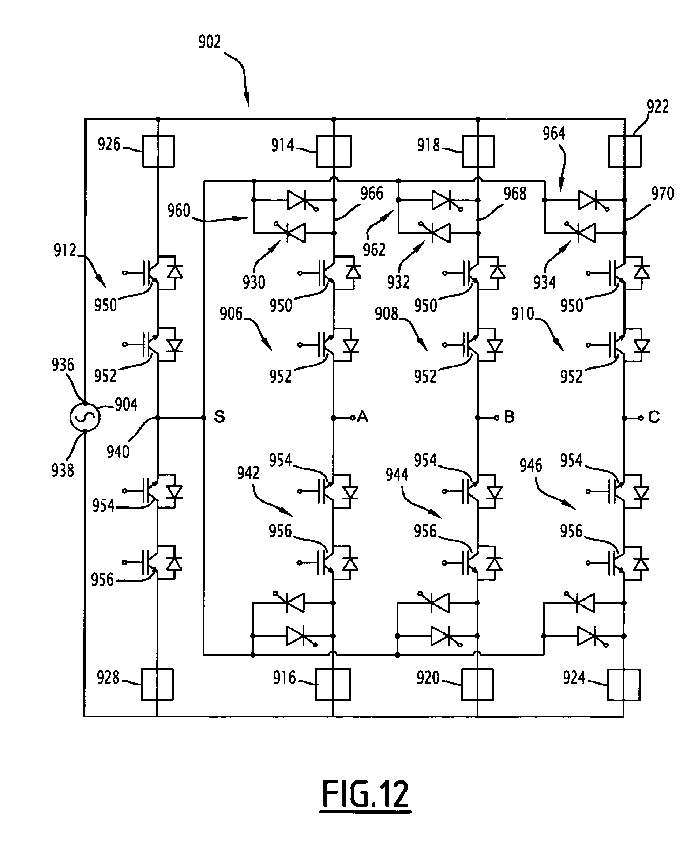

Suivant la figure 12, un convertisseur statique 902 de type AC/AC est connecté entre une source 904 de tension alternative et une charge non représentée à entrées triphasées désignées par les lettres A, B, C.

Le convertisseur 902 comprend trois bras principaux 906, 908, 910 de conversion statique et un bras de secours 912 de structure identique.

Le convertisseur 902 comprend également des composants d'isolement 914, 916, 918, 920, 922, 924, 926, 928 qui sont ici des fusibles et qui sont associés deux à deux en quatre paires distinctes, et trois circuits d'aiguillage 930, 932, 934.

Chaque bras principal 906, 908, 910 est connecté entre une première de polarité 936 et une deuxième borne de polarité 938 de la source 904 à tension alternative au travers d'une paire respective différente de fusibles, les fusibles 914, 916 pour le bras 906, les fusibles 918, 920 pour le bras 908, et les fusibles 922, 924 pour le bras principal 910.

Le bras de secours 912 est connecté entre la première borne de polarité 936 et la deuxième borne de polarité 938 de la source 904 au travers de la paire de fusibles 926, 928 et comprend une borne de sortie 940.

Chaque bras principal 906, 908, 910 et le bras de secours 912 comprennent respectivement chacun une paire 942, 944, 946 de cellules de commutation imbriquées polarisées en inverse.

Chaque paire 942, 944, 9946 de cellules de commutation comprend une association série de quatre interrupteurs 950, 952, 954, 956 montés suivant une polarisation alternée.

Les interrupteurs 950, 952, 954, 956 sont formés chacun l'association d'un transistor et d'une diode de redondance montée en antiparallèle par rapport au sens de polarisation du transistor.

Les moyens de commande des transistors ne sont pas représentés sur la figure 12.

Chaque circuit d'aiguillage 930, 932, 934 est associé respectivement à un unique bras principal différent 106, 108, 110 et comprend une première paire 960, 962, 964 de thyristors montés tête-bêche connectée depuis la borne de sortie 940 formant point milieu du bras de secours 912 jusqu'à un point de connexion 966, 968, 970 respectif. Chaque point de connexion 966, 968, 970 relie respectivement le bras principal associé 906, 908, 910 au fusible associé respectif 914, 918, 922 connecté à la première borne de polarité 936.

Chaque circuit d'aiguillage 930, 932, 934 comprend une deuxième paire 974, 976, 978 de thyristors montés tête-bêche connectée depuis la borne de sortie 940 formant point milieu du bras de secours 912 jusqu'à un point de connexion 980, 982, 984 respectif. Chaque point de connexion 980, 982, 984 relie respectivement le bras principal associé 906, 908, 910 au fusible associé respectif 916, 920, 924 connecté à la deuxième borne de polarité 938.

Chaque circuit d'aiguillage assure en plus de sa fonction d'aiguillage propre à un convertisseur de type AC/AC une fonction d'aide à l'isolement du bras principal auquel il est associé si cela est nécessaire.

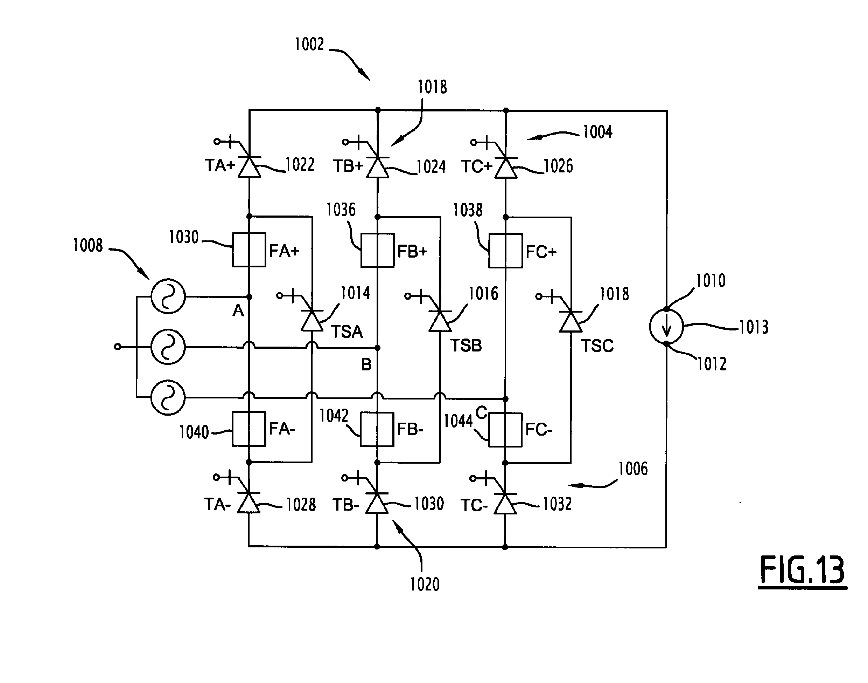

Suivant la figure 13, un pont redresseur 1002 triphasé dans le cas général comprend deux cellules de commutation 1004, 1006 principales connectées aux trois phases de sortie A, B, C de la source 1008 à courant alternatif, et à un des deux pôles 1010, 1012 de la charge électrique 1013 destinée à recevoir un courant continu, et trois interrupteurs de secours 1014, 1015, 1016 désignés respectivement par TSA, TSB, TSC.

Chaque cellule de commutation 1004, 1006 principale comprend ici un premier triplet 1018 et un deuxième triplet 1020 d'interrupteurs principaux 1022, 1024, 1026, 1028, 1030, 1032.

Les interrupteurs principaux 1022, 1024, 1026 du premier triplet 1018 désignés également par TA+, TB+, TC+ sont raccordés chacun à une phase respective qui lui est associée, A, B, C, au travers de fusibles associés différents 1034, 1036, 1038 encore désignés par FA+, FB+, FC+.

Les interrupteurs principaux 1028, 1030, 1032 du deuxième triplet 1020 désignés également par TA-, TB-, TC- sont raccordés chacun à une phase respective qui lui est associée, A, B, C au travers de fusibles associés différents 1040, 1042, 1044 encore désignés par FA-, FB-, FC-.

Chaque thyristor de secours 1014, 1016, 1018 est banché en parallèle sur un circuit série différent de deux fusibles, les fusibles 1034, 1040 pour le thyristor de secours 1014, les fusibles 1036, 1042 pour le thyristor de secours 1016, les fusibles 1038, 1044 pour le thyristor de secours 1018.

En présence d'une défaillance d'un interrupteur principal quelconque i.e. la perte de la tenue en tension inverse, la source de tension 1008 à courant alternatif est mise en court-circuit entre deux des trois phases. L'isolement complet de la maille de commutation en défaut est obtenu grâce au fusible inséré en série avec chaque interrupteur. En raison de la disposition des fusibles du côté de la source électrique les interrupteurs de secours sont partagés par les deux cellules de commutation principales.

Au premier défaut, par exemple sur l'un des interrupteurs TA+ ou TB+, les interrupteurs TSA et TSB viendront se substituer spontanément aux interrupteurs TA+ et TB+ par l'isolement des fusibles FA+ et FB+, les fusibles FA- et FB- assurant la protection dernier secours dans le cas d'un deuxième défaut sur les interrupteurs TSA, TSB, TA- ou TB-. Si le deuxième défaut se produit sur une phase différente, ici la phase C, la poursuite de mission est possible et obtenue par la connexion de TSC.

Comme pour les cas de l'onduleur et du hacheur, les interrupteurs de secours ne sont soumis à aucune contrainte de dv/dt en fonctionnement normal ; qui plus est, dans ce mode de conversion, la tension appliquée aux bornes des trois interrupteurs de secours est nulle ; il d'agit donc d'une redondance passive froide très intéressante. En fonctionnement normal, il n'y a pas ni courant de fuite ni pertes.

De manière générale, un convertisseur statique, destiné à la conversion d'énergie électrique entre une source électrique à courant alternatif multi-phases ayant un nombre n de phases supérieur ou égale à deux et une charge électrique à courant continu avec un niveau de courant de sortie réglable comprend :
une paire de cellules de commutation formée d'une première cellule principale de commutation et d'une deuxième cellule principale de commutation, et des fusibles,
la première cellule de commutation comprenant un nombre n de premiers interrupteurs unidirectionnels connectés suivant un même sens d'écoulement de courant à une même première borne de sortie et des premiers moyens de commandes associés, la première borne de sortie étant apte à être connectée à une première borne d'entrée de la charge,
la deuxième cellule de commutation comprenant un nombre n de deuxième interrupteurs unidirectionnels connectés suivant un même sens d'écoulement de courant à une deuxième borne sortie et des deuxièmes moyens de commande associés, la deuxième borne de sortie étant apte à être connectée à une deuxième borne d'entrée de la charge,
les premiers interrupteurs unidirectionnels étant appariés aux deuxièmes interrupteurs unidirectionnels suivant des paires distinctes,
les cellules de commutation étant configurées au travers de leurs moyens de commande associés pour être actives dans un mode nominal prédéterminé du convertisseur.

Le convertisseur est caractérisé en ce que les fusibles sont répartis en des paires de fusibles,
chaque paire de fusibles est associée respectivement à une paire d'interrupteurs différente, comprend, montés en série, un premier fusible et un deuxième fusible formant chacun un dipôle électrique et possède un point milieu de connexion des deux fusibles entre eux, apte à être raccordé à une borne de phase de sortie différente de la source électrique, et
chaque paire de fusibles est connectée en série entre le premier et le deuxième interrupteurs unidirectionnels en courant de la paire d'interrupteurs à laquelle elle est associée, les deux interrupteurs unidirectionnels en courant étant branchés en série au travers de la paire de fusibles dans un même sens,
le convertisseur comprend des interrupteurs unidirectionnels de secours, chaque interrupteur de secours étant branché en parallèle aux bornes d'une paire de fusibles différente,
chaque interrupteur d'une cellule de commutation est apte à présenter une impédance permanente stable inférieure à une dizaine de milliohms après avoir subi une défaillance consécutive à un emballement thermique ou un court-circuit,
chaque élément fusible raccordé à un interrupteur principal est dimensionné de sorte à isoler l'interrupteur principal auquel il est associé après l'écoulement d'une première durée temporelle pour l'établissement d'un mode de défaillance à faible impédance stable sur l'interrupteur unidirectionnel défaillant et avant l'écoulement d'une deuxième durée temporelle pour éviter la création d'une ouverture de circuit par l'interrupteur défaillant,
les moyens de commande de l'interrupteur de secours associé à la paire à laquelle appartient l'interrupteur devenu défaillant et les moyens de commandes de l'interrupteur de secours associé à la paire d'interrupteurs correspondant à la phase immédiatement successive sont configurés de manière à assurer une reprise en secours immédiate sans dégrader la performance du redressement.

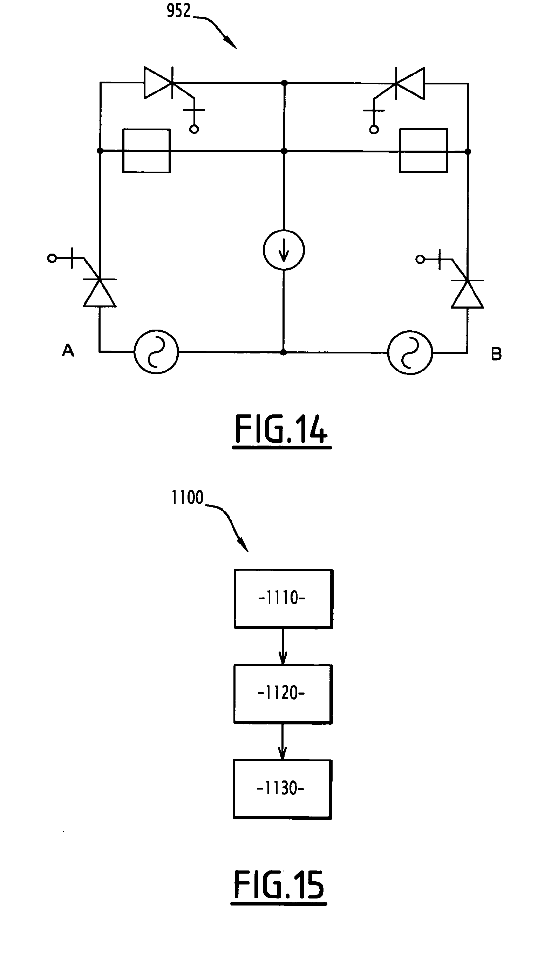

Suivant la figure 14, une redresseur unicellulaire 1052 est fondé sur le même principe de connexion et les mêmes propriétés sur les interrupteurs de secours que le redresseur à deux cellules décrit à la figure 13. Ici, sur le principe, les fusibles peuvent être insérés indifféremment côté anode ou côté cathode des interrupteurs principaux.

Suivant la figure 15, un procédé de maintien de la continuité de service 1100 d'un convertisseur décrit dans les figures 1 à 12 comprend les étapes suivantes.

Dans une première étape 1110, les moyens de commande des interrupteurs commandés des cellules de commutation des bras principaux sont configurés de sorte que le convertisseur statique fonctionne de manière nominale sur les bras principaux lorsqu'aucun des composants de puissance formant les bras principaux n'est défectueux.

Dans une étape suivante 1120, lorsqu'un défaut a lieu sur un interrupteur d'une cellule principale, tous les interrupteurs du bras principal auquel appartient l'interrupteur défectueux et reliés en série sont mis en court-circuit pendant une durée t d'obtention de l'isolement du bras principal devenu défaillant, supérieure à une première durée t1 pour que le bras principal atteigne un état stable et permanent de conducteur à très basse impédance, inférieure à quelques dizaine de milli-ohms, et inférieure à une deuxième durée t2 en dessous de laquelle l'intégrité des composants du bras principal défectueux est préservée ainsi que l'état conducteur atteint du bras principal défectueux,

Dans une étape suivante 1130, les interrupteurs de secours configurés dans la même configuration que celle des interrupteurs du bras principal défaillant sont connectés automatiquement par le circuit d'aiguillage du bras principal défectueux devenu un conducteur stable.

En variante, l'étape 1110 est précédée d'une étape préalable dans laquelle, lorsque le convertisseur fonctionne normalement, c'est-à-dire lorsqu'il n'y a pas de panne, les moyens de commande 58 des interrupteurs du bras de secours 18 sont configurés de sorte que le bras de secours est placé dans un état de veille avec le minimum de contrainte sur les composants de puissance.

Par exemple, dans cette étape préalable les moyens de commande 58 des interrupteurs du bras de secours 18 sont configurés de sorte que ses transistors et ses diodes sont maintenus dans un état statique bloqué.

Dans cette même variante, les étapes suivantes sont mises en oeuvre en même temps que l'étape 1120. Les moyens de détection et de localisation 24 détectent et localisent le bras de conversion principal devenu défaillant et commandent aux moyens de commande des interrupteurs de secours du bras de secours d'adopter la même configuration de commande que celle des interrupteurs du bras principal devenu défaillant en fonctionnement normal.

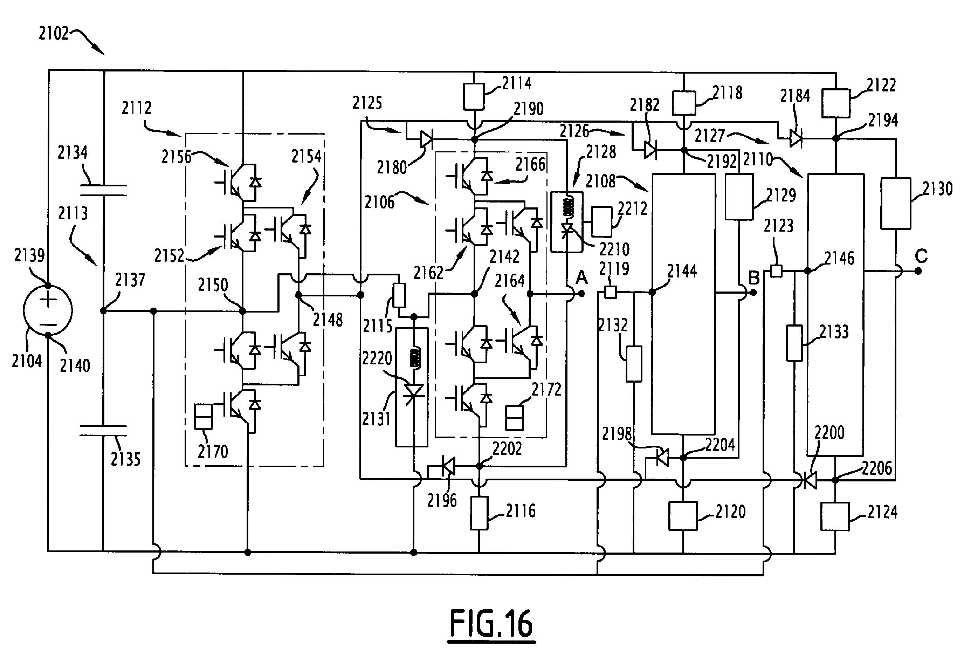

Suivant la Figure 16, le convertisseur statique de la Figure 1 est un onduleur triphasé 2102 ANPC à trois niveaux imposés par régulation du point neutre d'entrée, l'acronyme anglais ANPC signifiant Active Neutral Point Clamped.

L'article de T. Brückner et S.Bernet intitulé « Loss balancing in three-level voltage source inverters applying Active NPC switches" pages 1135-1140, IEEE 2001 décrit un onduleur triphasé ANPC à trois niveaux imposés par régulation du point neutre d'entrée sans bras de secours.

L'onduleur 2102 dont les trois phases de sortie sont désignées respectivement par les lettres A, B, C est connecté entre une source 2104 de tension continue et une charge à entrées triphasées non représentée.

L'onduleur 2102 comprend trois bras principaux 2106, 2108, 2110 de conversion statique et un bras de secours 2112 de structure identique.

L'onduleur 2102 comprend également un pont diviseur capacitif 2113 à point milieu de création d'un point neutre, et des composants d'isolement 2114, 2115, 2116, 2118, 2119, 2120, 2122, 2123, 2124 qui sont ici des fusibles et qui sont associés trois par trois en trois triplets distincts (2214, 2115, 2116), (2118, 2119, 2120), (2122, 2123, 2124), trois circuits d'aiguillage 2125, 2126, 2127, trois circuits 2128, 2129, 2130 d'aide à l'isolement d'un bras principal de la source, et trois circuits 2131, 2132, 2133 d'aide à l'isolement d'un bras principal du point neutre.

L'onduleur 2102 comprend également des moyens de détection et de localisation d'un bras principal défaillant non représentés sur la figure 16.

Le pont diviseur capacitif 2113 comprend deux capacités 2134, 2135 de même valeur, reliées entre elles en série par une de leurs extrémités respectives en un point milieu 2137 formant un point de mise au neutre de l'onduleur.

Le circuit série, formé par les deux capacités 2134, 2135, est connecté au travers des extrémités restantes des deux capacités entre une unique borne de polarité positive 2139 et une unique borne de polarité négative 2140 de la source 2104

Chaque bras principal 2106, 2108, 2110 est connecté entre l'unique borne de polarité positive 2139 et l'unique borne de polarité négative 2140 de la source 2104 au travers d'une paire respective différente de fusibles, chaque paire appartenant à un triplet distinct, les fusibles 2114, 2116 pour le bras 2106, les fusibles 2118, 2120 pour le bras 2108, et les fusibles 2122, 2124 pour le bras principal 2110.

Chaque bras principal 2106, 2108, 2110 est connecté au point milieu du pont diviseur capacitif en un point d'entrée respectif 2142, 2144, 2146 de mise au neutre du bras principal au travers du fusible restant respectif 2115, 2219, 2123 du triplet associé (2214, 2115, 2116), (2118, 2119, 2120), (2122, 2123, 2124).

Le bras de secours 2112 est connecté entre la borne de polarité positive 2139 et la borne de polarité négative 2140 de la source 2104. Il comprend une borne de sortie 2148 et un point d'entrée 2150 de mise au neutre du bras de secours.

Chaque bras principal 2106, 2108, 2110 et le bras de secours 2112 comprennent trois cellules de commutation différentes dont deux cellules internes de commutation branchées en parallèle entre elles et imbriquées dans la cellule de commutation restante.

Ici sur la Figure 16, seules sont représentées les cellules de commutation du bras de secours 2112 et du bras principal 2106, l'architecture des deux autres bras principaux 2108, 2110 en terme de cellule de commutation étant identique.

Chaque cellule de commutation comprend une association série d'un premier interrupteur et d'un deuxième interrupteur avec un point milieu correspondant.

Le bras de secours 2112 comprend une première cellule interne 2152 de commutation dont un point milieu associé est le point d'entrée 2150 de mise au neutre, une deuxième cellule interne 2154 de commutation dont un point milieu est le point de sortie 2148 du bras de secours 2112. Les première et deuxième cellules internes 2152, 2154, branchées en parallèle, sont imbriquées dans une troisième cellule de commutation 2156 dont un interrupteur différent est connecté à la première et la deuxième polarités 2139,2140.

Le bras principal 2106 comprend une première cellule interne 2162 de commutation dont un point milieu associé est le point d'entrée 2142 de mise au neutre, une deuxième cellule interne 2164 de commutation dont un point milieu est le point de phase de sortie A du bras principal 2106. Les première et deuxième cellules internes 2162, 2164, branchées en parallèle, sont imbriquées dans une troisième cellule de commutation 2166 dont un interrupteur différent est connecté à la première et la deuxième polarités 2139, 2140 au travers des fusibles 2114, 2116 respectifs.

Les interrupteurs des cellules de commutation sont formés chacun d'une association d'un transistor et d'une diode de redondance montée en antiparallèle.

Seuls les moyens de commande des transistors du bras de secours 2112 et du bras principal 2106 sont représentés sur la figure 16 dans un souci de lisibilité et sont respectivement désignés par les références 2170 et 2172.

Chaque circuit d'aiguillage 2125, 2126, 2127 est associé respectivement à un unique bras principal différent 2106, 2108, 2110 et comprend une première diode 2180, 2182, 2184 connectée en direct depuis la borne de sortie 2148 de la deuxième cellule de commutation interne 2154 du bras de secours 2112 jusqu'à un point de connexion 2190, 2192, 2194 respectif. Chaque point de connexion 2190, 2192, 2194 relie respectivement la troisième cellule de commutation externe associée à un bras principal 2106, 2108, 2110 au fusible associé respectif 2114, 2118, 2122 connecté à la borne de polarité positive 2139.

Chaque circuit d'aiguillage 2125, 2126, 2127 comprend une deuxième diode 2196, 2198, 2200 connectée en direct depuis un point de connexion 2202, 2204, 2206 associé jusqu'à la borne de sortie 2148 de la cellule de commutation interne 2154 du bras de secours 2112. Chaque point de connexion 2202, 2204, 2206 relie respectivement la troisième cellule de commutation externe associée à un bras principal 2106, 2108, 2110 au fusible associé respectif 2116, 2120, 2124, connecté à la borne de polarité négative 2140.

Chaque circuit 2128, 2129, 2130 d'aide à l'isolement d'un bras principal de la source 2104 auxiliaire est branché respectivement entre les points de connexion 2190, 2192, 2194 et 2202, 2204, 2206.

Les trois circuits 2128, 2129, 2130 d'aide à l'isolement d'un bras principal de la source 2104 sont réalisés à l'aide de trois thyristors auxiliaires dont seul celui du circuit 2128 associé au bras principal 2106 et désigné par la référence 2210, est représenté sur la figure 16.

Chaque thyristor d'aide à l'isolement d'un bras principal de la source 2104, associé à un unique bras principal de conversion différent 2106, 2108, 2110, est configuré pour isoler le bras principal associé dans le cas où le bras devient défaillant, avec des moyens de commande associés, représentés seulement sur la figure 16 pour le bras principal 2106 et désignés par 2212.

Les trois circuits 2131, 2132, 2133 d'aide à l'isolement d'un bras principal du point neutre sont branchés ici directement et respectivement entre le point d'entrée de neutre associé à un bras principal et la borne de polarité négative 2140.

En variante, les trois circuits 2131, 2132, 2133 d'aide à l'isolement d'un bras principal du point neutre sont branchés directement et respectivement entre le point d'entrée de neutre associé à un bras principal et la borne de polarité positive 2139.

Les trois circuits 2131, 2132, 2133 d'aide à l'isolement d'un bras principal du point neutre sont réalisés à l'aide de trois thyristors auxiliaires dont seul celui du circuit 2131 associé au bras principal 2106 et désigné par la référence 2220, est représenté sur la figure 16.

Chaque thyristor d'aide à l'isolement d'un bras principal du point neutre, associé à un unique bras principal de conversion différent 2106, 2108, 2110, est configuré pour isoler le bras principal associé dans le cas où le bras devient défaillant, avec des moyens de commande associés, non représentés sur la figure 16.

Il est à remarquer que les variantes de réalisation des composants d'isolement, des circuits d'aiguillage, des circuits d'aide à l'isolement, décrites pour les figures 3 à 5 peuvent être également utilisées.

En fonctionnement normal, c'est-à-dire en l'absence de défaut sur chaque bras principal, les moyens de commande des interrupteurs de cellules de commutation des bras principaux sont configurés de sorte que l'onduleur fonctionne selon un mode ANPC classique.

En cas d'une panne sur un bras principal quelconque, c'est-à-dire sur une phase quelconque, le schéma ici proposé d'isolement complet du bras principal ANPC défaillant et sa connexion à un bras de secours mutualisé en utilisant un circuit d'aiguillage pouvant être limité à deux diodes, permet de suppléer à un défaut interne quelconque sur l'onduleur en préservant une marche de secours à 100% de la tension et de la puissance sans avoir à sur-dimensionner en tension les composants des bras principaux et du bras de secours.

En variante, le convertisseur statique de la Figure 16 de type ANPC est remplacé par un onduleur triphasé de type NPC, l'acronyme anglais NPC signifiant Neutral Point Clamped. Dans l'onduleur triphasé de type NPC, les première cellules internes de commutation d'un bras quelconque de l'onduleur triphasé ANPC de la Figure 16 sont remplacées chacune par une série différente de deux diodes polarisées dans le même sens, le point commun de la série des deux diodes étant connecté au circuit d'isolement de point neutre associé au bras principal.

En variante, le nombre de phases de l'onduleur de type ANPC ou NPC est quelconque.

En variante, et en généralisation d'un onduleur de type ANPC ou NPC, le convertisseur statique est un onduleur à imposition d'un point milieu d'alimentation, configuré pour être connecté à une source de tension à courant continu et pour délivrer à une charge électrique un courant alternatif sur au moins une phase.

L'onduleur comprend un pont diviseur capacitif, configuré pour fournir un point milieu de tension d'alimentation d'entrée.

Chaque bras principal, associé à une phase, et le bras de secours comprennent une borne d'entrée distincte d'imposition du point milieu de tension.

Pour chaque phase et chaque bras principal associé, l'onduleur comprend un composant d'isolement du bras principal du point milieu du pont diviseur capacitif, connecté à la borne d'entrée d'imposition du point milieu de tension au bras principal.

La première borne d'entrée et la deuxième borne d'entrée d'alimentation d'un bras principal quelconque sont raccordées respectivement à la première polarité positive et à la deuxième polarité négative de la source électrique au travers d'une paire différente de composants d'isolement de la source.

Chaque cellule de commutation d'un bras principal ou d'un bras de secours comprend une paire d'interrupteurs bidirectionnels en courant montés en série, chaque interrupteur bidirectionnel en courant étant formé par un interrupteur commandé et une diode associée montée en antiparallèle, chaque interrupteur commandé étant un élément compris dans l'ensemble formé par les thyristors, les transistors de type IGBT, les transistors de type MOS.

Chaque bras principal et le bras de secours comprennent une cellule de commutation de sortie différente ayant une borne de connexion à ses deux interrupteurs formant une borne de sortie d'une phase (A), et comprennent une borne d'entrée différente d'imposition d'un point milieu.

Le circuit d'aiguillage comporte un premier élément de connexion semi-conducteur unidirectionnel en courant non commandé et un deuxième élément de connexion semi-conducteur unidirectionnel en courant non commandé, le premier élément de connexion étant connecté en direct depuis la sortie du bras de secours à la première borne d'entrée du bras principal, le deuxième élément de connexion étant connecté en inverse depuis la sortie du bras de secours vers la deuxième borne d'entrée négative du bras principal.

Les moyens de commandes des cellules de commutation du ou des bras principaux sont configurés de sorte que le convertisseur fonctionne en onduleur sur une ou plusieurs phases lorsque tous les bras principaux fonctionnent sans défaut.

## Revendications

1. Convertisseur statique, destiné à la conversion d'énergie électrique entre une source électrique (4; 104; 504; 904; 2104) de tension et une charge électrique (6; 506) comprenant :
un bras principal (16; 106; 512; 906; 2106) de conversion statique comportant au moins une cellule de commutation électronique à semi-conducteurs munie de moyens de commandes associés (38 ; 2172), une première borne d'entrée (30; 170; 562; 966 ; 2190) et une deuxième borne d'entrée (32; 182) d'alimentation aptes à être raccordées respectivement à une première polarité (8; 134; 524; 936; 2139) et à une deuxième polarité (10; 135; 526; 938; 2140) de la source électrique, une borne de sortie (34) raccordée à une cellule de commutation de sortie (36) et apte à être raccordée à la charge électrique (6), chaque cellule de commutation étant configurée au travers de ses moyens de commandes associés (38) pour être active dans un mode nominal prédéterminé du convertisseur,
une paire de composants d'isolement (70, 72; 114, 116; 515, 516; 914, 916; 2114, 2116), associée au bras de commutation principal (16; 106; 512; 906; 2106), formé d'un premier et d'un deuxième composants d'isolement formant chacun un dipôle, le premier composant d'isolement (70; 114; 515; 914; 2114) et le deuxième composant d'isolement (72; 116; 516; 916; 2116) étant respectivement et directement raccordés à la première borne (30; 170; 562; 966; 2190) et à la deuxième borne d'entrée (32; 182) d'alimentation du bras principal (16; 106; 512; 906),
**caractérisé en ce que**
le convertisseur comprend
un bras de conversion de secours (18; 112; 514; 912; 2112) comportant au moins une cellule de commutation électronique à semi-conducteurs munie de moyens de commande (58) associés, une première borne d'entrée (50) et une deuxième borne d'entrée (52) d'alimentation, aptes à être raccordées respectivement à la première polarité (8; 134; 524; 936; 2139) et la deuxième polarité (10; 135; 526; 938; 2140) de la source électrique (4; 104; 504; 904), une borne de sortie (54; 136; 530; 940; 2104) raccordée à une cellule de commutation de sortie (56; 142; 538), et
un circuit d'aiguillage électronique (26; 133; 522; 930; 2125) à semi-conducteurs ayant un élément de connexion (80; 164; 560; 960; 2180) connecté entre la borne de sortie (54; 136; 530; 940; 2148) du bras de secours (18; 112; 514; 912; 2112) et une borne d'entrée du bras principal parmi la première borne d'entrée et la deuxième borne d'entrée du bras principal,
la ou les cellules de commutation du bras principal reliées en série entre la première borne d'entrée et la deuxième borne d'entrée sont aptes chacune à présenter une impédance permanente stable inférieure à quelques dizaines de milli-ohms lorsque le bras principal a subi une défaillance consécutive à un emballement thermique ou un court-circuit d'un de ses composants semi-conducteurs,
les composants d'isolement (70, 72; 114, 116; 515, 516; 914, 916; 2114, 2116) du bras principal sont dimensionnés de sorte à isoler le bras principal après l'écoulement d'une première durée temporelle t1 pour l'établissement d'un mode de défaillance à faible impédance stable sur la ou les cellules de commutation du bras de conversion principal reliées en série et avant l'écoulement d'une deuxième durée temporelle t2 pour éviter la création d'une ouverture de circuit sur le bras de conversion principal,
les moyens de commande de la ou des cellules de secours formant le bras de secours sont aptes à être mis en oeuvre après l'isolement du bras de conversion principal devenu défaillant pour remplacer partiellement ou en totalité le bras principal,
l'élément de connexion (80; 164; 560; 960 ; 2180) est configuré pour être dans un état bloqué lorsque le bras principal est actif dans le mode nominal et pour être dans un état passant lorsque le bras principal est défaillant et que le bras de secours est devenu actif.

2. Convertisseur statique selon la revendication 1, dans lequel l'élément de connexion (80; 164; 560; 960; 2180) est un élément compris dans l'ensemble constitué par une diode, un thyristor, une association de deux thyristors montés en tête-bêche et un transistor.

3. Convertisseur statique selon l'une quelconque des revendications 1 à 2, **caractérisé en ce que** les éléments semi-conducteurs des cellules de commutation du bras de secours de conversion (18; 112; 514; 912; 2112) sont configurés pour être dans un état bloqué lorsque le bras principal est actif dans le mode nominal et pour remplacer partiellement ou en totalité le bras principal après isolement du bras devenu défaillant.

4. Convertisseur statique selon l'une quelconque des revendications 1 à 3, comprenant des moyens d'aide à l'isolement (28) du bras principal, les moyens d'aide à l'isolement comportant
un thyristor auxiliaire (90) ou une association de deux thyristors auxiliaires montés en tête bêche, branché en parallèle à la première borne d'entrée (30) et à la deuxième borne d'entrée (32) du bras principal (16), un thyristor auxiliaire étant monté lorsque la source de tension est à courant continu et une association de deux thyristors auxiliaires montés en tête bêche étant utilisé lorsque la source de tension est à courant alternatif, et
des moyens de commande (92) du thyristor auxiliaire (90) ou des deux thyristors auxiliaires configurés de sorte que si le bras de conversion principal (16) défaillant n'est pas symétriquement isolé par la paire (20) des composants d'isolement (70, 72) qui lui est associée, il crée un court-circuit aux bornes de la charge (6) afin de provoquer une isolation symétrique par chaque composant d'isolement (70, 72) de la paire.

5. Convertisseur statique selon la revendication 4, comprenant pour chaque cellule de commutation du bras de conversion principal des moyens de protection rapide associés aptes à détecter un courant de court-circuit intolérable de traversée de la cellule par rapport à une valeur d'un courant seuil prédéterminée et à déclencher l'ouverture de la cellule de commutation après la détection du dépassement du courant seuil.

6. Convertisseur statique selon l'une quelconque des revendications 1 à 5, comprenant en outre des moyens de détection (24) du bras principal défaillant (16) aptes à commander aux moyens de commande des cellules de commutation du bras de secours (18) d'adopter la même configuration de commande que celle du bras détecté défaillant.

7. Convertisseur statique selon l'une quelconque des revendications 1 à 6, **caractérisée en ce que** :
le convertisseur statique comprend au moins deux bras principaux (16 ; 106, 108 ; 606, 608)
chaque bras principal (16 ; 106, 108; 606, 608) étant de structure identique et comportant au moins une cellule de commutation électronique munie de moyens de commande associés, une première borne d'entrée (30 ; 170, 172) et une deuxième borne d'entrée d'alimentation (32; 182, 184) aptes à être raccordées respectivement à la première polarité (8 ;134) et la deuxième polarité (10 ; 135) de la source électrique (4 ; 134), une borne de sortie de phase raccordée à une cellule de commutation de sortie (36; 137, 138) apte à être raccordée à une phase distincte de la charge électrique, chaque cellule de commutation étant configurée au travers de ses moyens de commande pour être active dans un mode nominal prédéterminé du convertisseur,
le convertisseur comprend pour chaque bras de conversion principal (16 ; 106, 108 ; 606, 608), une paire de composants d'isolement associée et formée d'un premier composant d'isolement (20; 114, 118 ; 612, 614) et d'un deuxième composant d'isolement (72 ; 116, 120 ; 612, 614) formant chacun un dipôle, le premier composant d'isolement (20 ; 114, 118 ; 612, 614) et le deuxième composant d'isolement (72 ; 116, 120 ; 612, 614) étant respectivement et directement raccordés à la première borne d'entrée (30 ; 170, 172) et à la deuxième borne d'entrée (30 ; 170, 172), d'alimentation, du bras principal (16 ; 106, 108 ; 606, 608) associé,
le convertisseur comprend un unique bras de conversion de secours (18 ; 112 ; 612) ayant au moins une cellule de commutation de sortie (56 ; 142 ; 612) et une borne de sortie (54 ; 136) raccordé à la cellule de commutation de sortie (56 ; 142 ; 612), et
le convertisseur comprend pour chaque bras de conversion principal (16; 106, 108 ; 606, 608) un circuit d'aiguillage (26 ;130 ; 132 ; 628, 630) associé ayant un élément de connexion (80 ;160, 162) connecté entre la borne de sortie du bras de secours (54 ; 136) et la première borne d'entrée (30; 170, 172) du bras de conversion principal associé,
le convertisseur comprend pour chaque bras de conversion principal (16; 106, 108 ; 606, 608), des moyens de détection et de localisation (24) du bras principal défaillant (16) aptes à commander aux moyens de commande des cellules de commutation du bras de secours (18) d'adopter la même configuration de commande que celle du bras détecté défaillant et localisé,
la ou les cellules de commutation d'un bras principal quelconque reliées en série entre la première borne d'entrée et la deuxième borne d'entrée sont aptes chacune à présenter une impédance permanente stable inférieure à quelques dizaines de milli-ohms lorsque le bras principal a subi une défaillance consécutive à un emballement thermique ou un court-circuit d'un de ses composants semi-conducteurs,
les composants d'isolement (20; 114, 118,116, 120; 612, 614) de chaque bras principal (16 ; 106, 108 ; 606, 608) sont dimensionnés de sorte à isoler le bras principal après l'écoulement d'une première durée temporelle t1 pour l'établissement d'un mode de défaillance à faible impédance stable sur la ou les cellules de commutation du bras principal et avant l'écoulement d'une deuxième durée t2 pour éviter la création d'une ouverture de circuit sur le bras de conversion principal,
les moyens de commande de la ou des cellules de secours formant le bras de secours sont aptes à être mis en oeuvre après l'isolement d'un quelconque des bras principaux devenu défaillant pour remplacer partiellement ou en totalité le bras principal devenu défaillant,
l'élément de connexion ou les deux éléments de connexion de chaque circuit d'aiguillage associé à un bras principal sont configurés pour être dans un état bloqué lorsque le bras principal est actif dans le mode nominal et dans un état passant lorsque le bras principal est défaillant et que le bras de secours est devenu actif.

8. Convertisseur statique selon l'une quelconque des revendications 1 à 6, **caractérisée en ce qu'**il comprend
un premier nombre N supérieur ou égal à deux de bras commutation principaux, un deuxième nombre K de bras de commutation de secours supérieur ou égal à deux, un même deuxième nombre K de circuit d'aiguillage, chaque circuit d'aiguillage étant associé à un bras de commutation principal distinct, le premier nombre N étant supérieur ou égal au premier nombre K, et **en ce que**
chaque bras principal (16 ; 106, 108 ; 606, 608) est de structure identique et comporte au moins une cellule de commutation électronique munie de moyens de commande associés, une première borne d'entrée (30 ; 170, 172) et une deuxième borne d'entrée d'alimentation (32 ; 182, 184) aptes à être raccordées respectivement à la première polarité (8 ;134) et la deuxième polarité (10 ; 135) de la source électrique (4 ; 134), une borne de sortie de phase raccordée à une cellule de commutation de sortie (36; 137, 138) apte à être raccordée à une phase distincte de la charge électrique, chaque cellule de commutation étant configurée au travers de ses moyens de commande pour être active dans un mode nominal prédéterminé du convertisseur ;
le convertisseur comprend pour chaque bras de conversion principal (16; 106, 108 ; 606, 608), une paire de composants d'isolement associée et formée d'un premier composant d'isolement (20; 114, 118 ; 612, 614) et d'un deuxième composant d'isolement (72 ; 116, 120 ; 612, 614) formant chacun un dipôle, le premier composant d'isolement (20 ; 114, 118 ; 612, 614) et le deuxième composant d'isolement (72 ; 116, 120; 612, 614) étant respectivement et directement raccordés à la première borne d'entrée (30 ; 170, 172) et à la deuxième borne d'entrée (30 ; 170, 172), d'alimentation, du bras principal (16 ; 106, 108 ; 606, 608) associé ;
chaque bras de secours comporte au moins une cellule de commutation électronique à semi-conducteurs munie de moyens de commande associés, une première borne d'entrée et une deuxième borne d'entrée d'alimentation, aptes à être raccordées respectivement à la première polarité et la deuxième polarité de la source électrique, une borne de sortie raccordée à une cellule de commutation de sortie ; et
chaque circuit d'aiguillage associé à un bras principal est un multi-pôle électronique à semi-conducteurs comprenant K éléments de connexion, chaque élément de connexion est un thyristor lorsque la source de tension est à courant continu et une association de deux thyristors montés en tête-bêche lorsque la source de tension est à courant alternatif,
chaque circuit d'aiguillage comprend des moyens de commande associés aux thyristors,
chaque élément de connexion d'un même circuit d'aiguillage comporte une entrée connectée à la sortie d'un bras de secours différent et une sortie connectée à la première entrée du bras de commutation principal auquel le circuit d'aiguillage est associé.
les moyens de commande des thyristors des circuits d'aiguillage sont configurés pour être dans un état bloqué lorsque les bras principaux auxquels il sont associés sont actifs ;
les moyens de commande des thyristors des circuits d'aiguillage sont configurés de sorte que lorsqu'un bras de commutation principal quelconque connecté à un aiguilleur est défectueux, il est apte à être secouru par l'un quelconque des bras de secours non encore devenu actif.

9. Convertisseur statique selon l'une quelconque des revendications 1 à 8, dans lequel
le convertisseur est un onduleur (102) apte à être connecté à une source de tension à courant continu et à délivrer à une charge électrique un courant alternatif sur au moins une phase,
la première borne d'entrée (30;170) et la deuxième borne d'entrée (32 ;182) d'alimentation d'un bras principal sont aptes à être raccordées respectivement à une première polarité positive (8; 134) et une deuxième polarité négative (10 ;135) de la source électrique (4 ;104 ; 604) ;
chaque cellule de commutation d'un bras principal ou d'un bras de secours comprend une paire d'interrupteurs bidirectionnels en courant montés en série, chaque interrupteur bidirectionnel en courant étant formé par un interrupteur commandé et une diode associée montée en antiparallèle, chaque interrupteur commandé étant un élément compris dans l'ensemble formé par les thyristors, les transistors de type IGBT, les transistors de type MOS ;
les moyens de commandes des cellules de commutation du ou des bras principaux sont configurés de sorte que le convertisseur fonctionne en onduleur sur une ou plusieurs phases ;
le circuit d'aiguillage (130, 132) comporte un premier élément de connexion semi-conducteur unidirectionnel en courant non commandé (160, 162) et un deuxième élément de connexion semi-conducteur unidirectionnel en courant non commandé (176, 178), le premier élément de connexion (160, 162) étant connecté en direct depuis la sortie du bras de secours (136) à la première borne d'entrée du bras principal, le deuxième élément de connexion étant connecté en inverse depuis la sortie du bras de secours vers la deuxième borne d'entrée négative du bras principal.

10. Convertisseur statique selon l'une quelconque des revendications 1 à 8, **caractérisé en ce que**
le convertisseur est un hacheur apte à être connecté à une source de tension à courant continu et à délivrer à une charge électrique un courant continu sur au moins une phase de sortie,
la première borne d'entrée (30 ;170) et la deuxième borne d'entrée (32 ;182) d'alimentation d'un bras principal sont aptes à être raccordées respectivement à une première polarité positive (8; 134) et une deuxième polarité négative (10 ;135) de la source électrique (4 ;104 ; 604),
chaque cellule de commutation d'un bras principal ou d'un bras de secours comprend un interrupteur bidirectionnel monté en série avec une diode ou un deuxième interrupteur, chaque interrupteur bidirectionnel en courant étant formé par un interrupteur commandé et une diode associée montée en antiparallèle, chaque interrupteur commandé étant un élément compris dans l'ensemble formés par les thyristors, les transistors de type IGBT, les transistors de type MOS ;
les moyens de commandes des cellules de commutation du ou des bras principaux sont configurés de sorte que le convertisseur fonctionne en hacheur,
le circuit d'aiguillage associé à un bras principal comprend un unique élément de connexion à semi-conducteurs configuré pour être unidirectionnel en courant, l'élément de connexion unidirectionnel étant connecté en direct depuis la sortie du bras de secours à la première borne d'entrée du bras de conversion principal associé.

11. Convertisseur statique selon l'une quelconque des revendications 1 à 8, **caractérisé en ce que**
le convertisseur est un convertisseur de la famille AC/AC apte à convertir de l'énergie électrique entre une source de tension à courant alternatif et à délivrer à une charge électrique un courant alternatif sur au moins une phase de sortie,
la première borne d'entrée (30 ;170) et la deuxième borne d'entrée (32 ;182) d'alimentation d'un bras principal quelconque sont aptes à être raccordées respectivement à une première polarité positive (8 ; 134) et une deuxième polarité négative (10 ;135) de la source électrique (4 ;104 ; 604) ;
chaque cellule de commutation d'un bras principal ou d'un bras de secours comprend une paire d'interrupteurs bidirectionnels en courant montés en série, chaque interrupteur bidirectionnel en courant étant formé par un interrupteur commandé et une diode associée montée en antiparallèle, chaque interrupteur commandé étant un élément compris dans l'ensemble formé par les thyristors, les transistors de type IGBT, les transistors de type MOS ;
les moyens de commandes des cellules de commutation du ou des bras principaux sont configurés de sorte que le convertisseur fonctionne en un convertisseur de tension de type AC/AC sur une ou plusieurs phases de sortie,
le circuit d'aiguillage (130, 132) comporte un premier élément de connexion semi-conducteur bidirectionnel en courant (160, 162) et un deuxième élément de connexion semi-conducteur bidirectionnel en courant et en tension (176, 178), le premier élément de connexion (160, 162) étant connecté entre depuis la sortie du bras de secours (136) à la première borne d'entrée du bras principal, le deuxième élément de connexion étant connecté en inverse depuis la sortie du bras de secours vers la deuxième borne d'entrée négative du bras principal.

12. Convertisseur statique selon l'une quelconque des revendications 1 à 9, dans lequel
le convertisseur est un onduleur (2102), configuré pour être connecté à une source de tension (2104) à courant continu et pour délivrer à une charge électrique un courant alternatif sur au moins une phase (A, B, C),
comprenant un pont diviseur capacitif (2113), configuré pour fournir un point milieu stable (2137) de tension d'alimentation d'entrée, et
comprenant pour chaque phase et chaque bras principal associé (2106, 2108, 2110) un composant d'isolement (2115, 2119, 2123) du bras principal du point milieu (2137) du pont diviseur capacitif (2113);
chaque bras principal associé à une phase et le bras de secours comprennent une borne d'entrée différente d'imposition du point milieu de tension ;
la première borne d'entrée (2190, 2192, 2194) et la deuxième borne d'entrée (2202, 2204, 2206) d'alimentation d'un bras principal quelconque (2106, 2108, 2110) sont raccordées respectivement à une première polarité positive (2139) et une deuxième polarité négative (2140) de la source électrique (2104) au travers d'une paire différente de composants d'isolement (2214, 2116, 2118, 2120, 2122, 2124);
chaque borne d'entrée d'imposition du point milieu de tension est connectée au point neutre (2137) de tension d'alimentation d'entrée au travers d'un composant d'isolement (2115, 2119, 2123) du bras principal associé du point milieu (2137) du pont diviseur capacitif (2113) ;
chaque cellule de commutation d'un bras principal (2106, 2108, 2110) ou d'un bras de secours (2112) comprend une paire d'interrupteurs bidirectionnels en courant montés en série, chaque interrupteur bidirectionnel en courant étant formé par un interrupteur commandé et une diode associée montée en antiparallèle, chaque interrupteur commandé étant un élément compris dans l'ensemble formé par les thyristors, les transistors de type IGBT, les transistors de type MOS ;
chaque bras principal (2106) comprend une cellule de commutation (2164), de sortie ayant une borne de connexion à ses deux interrupteurs formant une borne de sortie d'une phase (A),
le circuit d'aiguillage (2125, 2126, 2127) comporte un premier élément de connexion semi-conducteur unidirectionnel en courant non commandé (2180, 2182, 2184) et un deuxième élément de connexion semi-conducteur unidirectionnel en courant non commandé (2196, 2198, 2200), le premier élément de connexion (2125, 2126, 2127) étant connecté en direct depuis la sortie (2148) du bras de secours (2112) à la première borne d'entrée (2190, 2192, 2194) du bras principal (2106, 2108, 2110), le deuxième élément de connexion (2196, 2198, 2200) étant connecté en inverse depuis la sortie (2148) du bras de secours (2212) vers la deuxième borne d'entrée négative du bras principal ;
les moyens de commandes des cellules de commutation (2172) du ou des bras principaux (2106, 2108, 2110) sont configurés de sorte que le convertisseur fonctionne en onduleur sur une ou plusieurs phases lorsque tous les bras principaux fonctionnent sans défaut.

13. Convertisseur statique selon la revendication 12, dans lequel
le convertisseur est un onduleur (2102) à plusieurs niveaux de tension de type ANPC ou NPC,
chaque cellule de commutation d'un bras principal (2106, 2108, 2110) ou d'un bras de secours (2112) comprend une paire d'interrupteurs bidirectionnels en courant montés en série, chaque interrupteur bidirectionnel en courant étant formé par un interrupteur commandé et une diode associée montée en antiparallèle, chaque interrupteur commandé étant un élément compris dans l'ensemble formé par les thyristors, les transistors de type IGBT, les transistors de type MOS ;
chaque bras principal (2106) comprend en propre une première et une deuxième cellules internes de commutation (2162, 2164), groupées en parallèle, ou une unique cellule interne dont la série des interrupteurs est branchée en parallèle à une série de deux diodes, et une cellule externe de commutation (2166) dans laquelle sont imbriquées la première et la deuxième cellules internes de commutation (2162, 2164) ou l'unique cellule interne et la série des deux diodes, la première cellule interne (2162) ou la série des deux diodes ayant un point commun (2142), la deuxième cellule interne ou l'unique cellule interne formant la cellule de sortie et ayant une borne de connexion à ses deux interrupteurs formant une borne de sortie d'une phase (A),
les moyens de commandes des cellules de commutation (2172) du ou des bras principaux (2106, 2108, 2110) sont configurés de sorte que le convertisseur fonctionne en onduleur à plusieurs niveaux de tension de type ANPC ou de type NPC sur une ou plusieurs phases lorsque tous les bras principaux fonctionnent sans défaut.

14. Convertisseur statique selon la revendication 12 comprenant pour chaque bras principal un moyen associé différent d'isolement du point milieu d'entrée du bras principal du point milieu du pont diviseur capacitif.

15. Procédé de maintien de service d'un convertisseur statique défini selon l'une des revendications 1 à 14, **caractérisé en ce qu'**il comprend les étapes consistant **en ce que** :
- les moyens de commande des interrupteurs commandés des cellules de commutation des bras principaux sont configurés (1010) de sorte que le convertisseur statique fonctionne de manière nominale sur les bras principaux lorsqu'aucun des composants de puissance formant les bras principaux n'est défectueux,
- lorsqu'un défaut a lieu sur un interrupteur d'une cellule principale, tous les interrupteurs du bras principal auquel appartient l'interrupteur défectueux et reliés en série, sont mis en court-circuit (1020) pendant une durée t d'obtention de l'isolement du bras principal devenu défaillant, supérieure à une première durée t1 pour que le bras principal atteigne un état stable et permanent de conducteur à très basse impédance inférieure à quelques dizaines de milli-ohms, et inférieure à une deuxième durée t2 en dessous de laquelle l'intégrité des composants du bras principal défectueux est préservée ainsi que l'état conducteur atteint du bras principal défectueux,
- les interrupteurs de secours configurés dans la même configuration que celle des interrupteurs du bras principal défaillant sont connectés (1030) automatiquement par le circuit d'aiguillage du bras principal défectueux devenu un conducteur stable.

## Patentansprüche

1. Statischer Wandler, der zum Umwandeln von elektrischer Energie zwischen einer elektrischen Spannungsquelle (4; 104; 504; 904; 2104) und einer elektrischen Last (6; 506) bestimmt ist, der Folgendes aufweist:
- einen Hauptzweig (16; 106; 512; 906; 2106) zur statischen Umwandung, der zumindest eine elektronische Schaltzelle mit Halbleitern aufweist, die mit zugeordneten Steuereinrichtungen (38; 2172) versehen ist, sowie eine erste Eingangsklemme (30; 170, 562; 966; 2190) und eine zweite Eingangsklemme (32; 182) zur Versorgung, die dazu ausgelegt sind, jeweils an eine erste Polarität (8; 134; 524; 936; 2139) bzw. an eine zweite Polarität (10; 135; 526; 938; 2140) der elektrischen Spannungsquelle angeschlossen zu werden, eine Ausgangsklemme (34), die an eine Ausgangsschaltzelle (36) angeschlossen ist und dazu ausgelegt ist, an die elektrische Last (6) angeschlossen zu werden, wobei jede Schaltzelle durch ihre zugeordneten Steuereinrichtungen (38) so konfiguriert wird, dass sie in einem vorbestimmten, nominalen Modus des Wandlers aktiv ist,
- ein Paar von Trennungselementen (70, 72; 114, 116; 515, 516; 914, 916; 2114, 2116), das dem Schalthauptzweig (16; 106; 512; 906; 2106) zugeordnet ist und aus einem ersten und aus einem zweiten Trennungselement besteht, die jeweils einen Dipol bilden, wobei das erste Trennungselement (70; 114; 515; 914; 2114) und das zweite Trennungselement (72; 116, 516; 916; 2116) direkt mit der ersten Klemme (30; 170; 562; 966; 2190) bzw. mit der zweiten Eingangsklemme (32; 182) zur Versorgung des Hauptzweigs (16; 106; 512; 906) verbunden sind,
**dadurch gekennzeichnet,**
**dass** der Wandler Folgendes aufweist:
einen Umwandlungshilfszweig (18; 112; 514; 912; 2112), der zumindest eine elektronische Schaltzelle mit Halbleitern aufweist, die mit zugeordneten Steuereinrichtungen (58) versehen ist, sowie eine erste Eingangsklemme (50) und eine zweite Eingangsklemme (52) zur Versorgung, die dazu ausgelegt sind, an eine erste Polarität (8; 134; 524; 936; 2139) bzw. an eine zweite Polarität (10; 135; 526; 938; 2140) der elektrischen Spannungsquelle (4; 104; 504; 904) angeschlossen zu werden, eine Ausgangsklemme (54; 136; 530; 940; 2104), die an eine Ausgangsschaltzelle (56; 142; 538) angeschlossen ist, und
eine elektronische Verzweigungsschaltung (26; 133; 522; 930; 2125) mit Halbleitern, die ein Verbindungselement (80; 164; 560, 960; 2180) aufweist, das zwischen der Ausgangsklemme (54; 136; 530; 940; 2148) des Hilfszweigs (18; 112; 514; 912; 2112) und der einen Eingangsklemme des Hauptzweigs von der ersten Eingangsklemme und der zweiten Eingangsklemme des Hauptzweigs angeschlossen ist,
wobei die Schaltzelle bzw. die Schaltzellen der Hauptzweigs, die in Reihe zwischen die erste Eingangsklemme und die zweite Eingangsklemme geschaltet sind, dazu ausgelegt sind, jeweils eine stabile, permanente Impedanz zu bieten, die geringer als einige zehn Milliohm ist, wenn der Hauptzweig einen Ausfall erlitten hat, der einem thermischen Durchgehen oder einem Kurzschluss eines seiner Halbleiterbauteile folgt,
wobei die Trennungselemente (70, 72; 114, 116; 515, 516; 914, 916; 2114, 2116) des Hauptzweigs so bemessen sind, dass der Hauptzweig nach Ablauf einer ersten Zeitdauer t1 zum Herstellen eines Ausfallmodus mit geringer stabiler Impedanz an der bzw. den in Reihe geschalteten Schaltzellen des Hauptumwandlungszweigs oder vor Ablauf einer zweiten Zeitdauer t2 getrennt wird, um das Hervorrufen eines Öffnens des Hauptumwandlungszweigs zu vermeiden,
wobei die Steuereinrichtungen der Hilfszelle bzw. der Hilfszellen, welche den Hilfszweig bilden, dazu ausgelegt sind, nach dem Trennen des Hauptumwandlungszweigs, der ausgefallen ist, in Betrieb zu gehen, um den Hauptzweig teilweise oder vollständig zu ersetzen,
wobei das Verbindungselement (80; 164, 560; 960; 2180) dazu konfiguriert ist, dann in einem Sperrzustand zu sein, wenn der Hauptzweig im nominalen Modus aktiv ist, und dann in einem Durchgangszustand zu sein, wenn der Hauptzweig ausfällt und der Hilfszweig aktiv geworden ist.

2. Statischer Wandler nach Anspruch 1,
wobei das Verbindungselement (80; 164; 560; 960; 2180) ein Element ist, das in der Gruppe enthalten ist, die aus einer Diode, einem Thyristor, einer Verbindung von zwei antiparallelen Thyristoren und einem Transistor besteht.

3. Statischer Wandler nach einem der Ansprüche 1 bis 2,
**dadurch gekennzeichnet,**
**dass** die Haltleiterelemente der Schaltzellen des Umwandlungshilfszweigs (18; 112; 514; 912; 2112) so konfiguriert sind, dass sie dann in einem Sperrzustand sind, wenn der Hauptzweig im nominalen Modus aktiv ist, und dass sie den Hauptzweig nach dem Trennen des ausgefallenen Zweigs teilweise oder vollständig ersetzen.

4. Statischer Wandler nach einem der Ansprüche 1 bis 3,
der Trennungshilfseinrichtungen (28) zum Trennen des Hauptzweigs aufweist, wobei die Trennungshilfseinrichtungen Folgendes aufweisen:
- einen Hilfsthyristor (90) oder eine Verbindung von zwei Hilfsthyristoren, die antiparallel geschaltet sind, parallelgeschaltet zur ersten Eingangsklemme (30) und zur zweiten Eingangsklemme (32) des Hauptzweigs (16) angeschlossen ist, wobei ein Hilfsthyristor dann angeschlossen wird, wenn die Spannungsquelle eine Gleichstromquelle ist, und eine Verbindung von zwei antiparallel geschalteten Hilfsthyristoren dann verwendet wird, wenn die Spannungsquelle eine Wechselstromquelle ist und
- Steuereinrichtungen (92) zum Steuern des Hilfsthyristors (90) oder der beiden Hilfsthyristoren, die so konfiguriert sind, dass dann, wenn der ausgefallene Umwandlungshauptzweig (16) durch das Paar (20) von Trennungselementen (70, 72) nicht symmetrisch getrennt ist, das diesem zugeordnet ist, er einen Kurschluss an den Klemmen der Last (6) erzeugt, um eine symmetrische Trennung durch jedes Trennungselement (70, 72) des Paares hervorzurufen.

5. Statischer Wandler nach Anspruch 4,
der für jede Schaltzelle des Umwandlungshauptzweigs zugeordnete Schnellschutzeinrichtungen aufweist, die dazu ausgelegt sind, einen Kurzschlussstrom durch die Zelle zu detektieren, der bezüglich eines vorbestimmten Schwellenwerts des Stroms unzulässig ist, und das Öffnen der Schaltzelle nach dem Detektieren des Überschreitens des Schwellenstroms auszulösen.

6. Statischer Wandler nach einem der Ansprüche 1 bis 5,
der ferner Detektoreinrichtungen (24) zum Detektieren des ausgefallenen Hauptzweigs (16) aufweist, die dazu ausgelegt sind, den Steuereinrichtungen zum Steuern der Schaltzellen des Hilfszweigs (18) zu befehlen, die gleiche Steuerkonfiguration wie die des detektierten ausgefallenen Zweiges anzunehmen.

7. Statischer Wandler nach einem der Ansprüche 1 bis 6,
**dadurch gekennzeichnet,**
**dass** der statische Wandler zumindest zwei Hauptzweige (16; 106, 108; 606, 608) aufweist,
wobei jeder Hauptzweig (16; 106, 108; 606, 608) im Aufbau identisch ist und zumindest eine elektronische Schaltzelle aufweist, die mit zugeordneten Steuereinrichtungen versehen ist, sowie eine erste Eingangsklemme (30; 170, 172) und eine zweite Eingangsklemme (32; 182, 184) zur Versorgung, die dazu ausgelegt sind, jeweils an die erste Polarität (8; 134) bzw. an die zweite Polarität (10; 135) der elektrischen Spannungsquelle (4; 134) angeschlossen zu werden, eine Phasenausgangsklemme, die an eine Ausgangsschaltzelle (36; 137, 138) angeschlossen ist und dazu ausgelegt ist, an eine bestimmte Phase von der elektrischen Last (6) angeschlossen zu werden, wobei jede Schaltzelle mit ihren zugeordneten Steuereinrichtungen so konfiguriert wird, dass sie in einem vorbestimmten nominalen Modus des Wandlers aktiv ist,
wobei der Wandler für jeden Umwandlungshauptzweig (16; 106, 108; 606, 608) ein zugeordnetes Paar von Trennungselementen aufweist, das aus einem ersten Trennungselement (20; 114, 118; 612, 614) und einem zweiten Trennungselement (72; 116, 120; 612, 614) besteht, die jeweils einen Dipol bilden, wobei das erste Trennungselement (20; 114, 118; 612, 614) und das zweite Trennungselement (72; 116, 120; 612; 614) jeweils direkt mit der ersten Eingangsklemme (30; 170, 172) bzw. mit der zweiten Eingangsklemme (30; 170, 172) zur Versorgung des zugeordneten Hauptzweigs (16; 106; 108; 606, 608) verbunden sind,
wobei der Wandler einen einzigen Umwandlungshilfszweig (18; 112; 612) aufweist, der zumindest eine Ausgangsschaltzelle (56; 142; 612) und eine Ausgangsklemme (54; 136) aufweist, die mit der Ausgangsschaltzelle (56; 142; 612) verbunden ist,
wobei der Wandler für jeden Umwandlungshauptzweig (16; 106, 108; 606, 608) eine zugeordnete Verzweigungsschaltung (26; 130; 132; 628, 630) aufweist, die ein Verbindungselement (80; 160, 162) aufweist, das zwischen der Ausgangsklemme (54; 136) des Hilfszweigs und der ersten Eingangsklemme (30; 170, 172) des zugeordneten Umwandlungshauptzweigs angeschlossen ist,
wobei der Wandler für jeden Umwandlungshauptzweig (16; 106, 108; 606, 608) Einrichtungen zum Detektieren und Lokalisieren (24) des ausgefallenen Hauptzweigs (16) aufweist, die dazu ausgelegt sind, den Steuereinrichtungen zum Steuern der Schaltzellen des Hilfszweigs (18) zu befehlen, die gleiche Steuerkonfiguration wie die des detektierten und lokalisierten, ausgefallenen Zweiges anzunehmen,
wobei die Schaltzelle bzw. die Schaltzellen eines beliebigen Hauptzweigs, die in Reihe zwischen die erste Eingangsklemme und die zweite Eingangsklemme geschaltet sind, dazu ausgelegt sind, jeweils eine stabile, permanente Impedanz zu bieten, die geringer als einige zehn Milliohm ist, wenn der Hauptzweig einen Ausfall erlitten hat, der einem thermischen Durchgehen oder einem Kurzschluss eines seiner Halbleiterkomponenten folgt,
wobei die Trennungselemente (20; 114, 118, 116; 120; 612, 614) eines jeden Hauptzweigs (16; 106, 108; 606, 608) so dimensioniert sind, dass der Hauptzweig nach Ablauf einer ersten Zeitdauer t1 zum Herstellen eines Ausfallmodus mit geringer stabiler Impedanz auf der bzw. den Schaltzellen des Hauptzweigs und vor Ablauf einer zweiten Zeitdauer t2 getrennt wird, um das Hervorrufen eines Öffnens des Umwandlungshauptzweigs zu vermeiden,
wobei die Steuereinrichtungen zum Steuern der Hilfszelle bzw. der Hilfszellen, welche den Hilfszweig bilden, dazu ausgelegt sind, nach dem Trennen irgendeines der Hauptzweige, der ausgefallen ist, in Betrieb zu gehen, um den ausgefallenen Hauptzweig teilweise oder vollständig zu ersetzen,
wobei das Verbindungselement bzw. die Verbindungselemente einer jeden Verzweigungsschaltung, die einem Hauptzweig zugeordnet ist, so konfiguriert sind, dass sie dann in einem Sperrzustand sind, wenn der Hauptzweig im nominalen Modus aktiv ist, und dann in einem Durchgangszustand sind, wenn der Hauptzweig ausfällt und der Hilfszweig aktiv geworden ist.

8. Statischer Wandler nach einem der Ansprüche 1 bis 6,
**dadurch gekennzeichnet,**
**dass** er Folgendes aufweist:
eine erste Anzahl N von Schalthauptzweigen, die größer als oder gleich zwei ist,
eine zweite Anzahl K von Hilfsschaltzweigen, die größer als oder gleich zwei ist,
und gleiche zweite Anzahl K von Verzweigungsschaltungen, wobei jede Verzweigungsschaltung einem bestimmten Umwandlungshauptzweig zugeordnet ist, wobei die erste Anzahl N größer als oder gleich der ersten Anzahl K ist,
und **dass** jeder Hauptzweig (16; 106, 108; 606, 608) im Aufbau identisch ist und zumindest eine elektronische Schaltzelle aufweist, die mit zugeordneten Steuereinrichtungen versehen ist, sowie eine erste Eingangsklemme (30; 170, 172) und eine zweite Eingangsklemme (32; 182, 184) zur Versorgung, die dazu ausgelegt sind, jeweils an die erste Polarität (8; 134) bzw. an die zweite Polarität (10; 135) der elektrischen Spannungsquelle (4; 134) angeschlossen zu werden, eine Phasenausgangsklemme, die an eine Ausgangsschaltzelle (36; 137, 138) angeschlossen ist und dazu ausgelegt ist, an eine bestimmte Phase von der elektrischen Last angeschlossen zu werden, wobei jede Schaltzelle durch ihre Steuereinrichtungen so konfiguriert ist, dass sie in einem vorbestimmten nominalen Modus des Wandlers aktiv ist,
wobei der Wandler für jeden Umwandlungshauptzweig (16; 106, 108; 606, 608) ein zugeordnetes Paar von Trennungselementen aufweist, das aus einem ersten Trennungselement (20; 114, 118; 612, 614) und einem zweiten Trennungselement (72; 116, 120; 612, 614) besteht, die jeweils einen Dipol bilden, wobei das erste Trennungselement (20; 114, 118; 612, 614) und das zweite Trennungselement (72; 116, 120; 612; 614) jeweils direkt mit der ersten Eingangsklemme (30; 170, 172) bzw. mit der zweiten Eingangsklemme (30; 170, 172) zur Versorgung des zugeordneten Hauptzweigs (16; 106; 108; 606, 608) verbunden sind,
wobei jeder Hilfszweig zumindest eine elektronische Schaltzelle mit Halbleitern aufweist, die mit zugeordneten Steuereinrichtungen versehen ist, sowie eine erste Eingangsklemme und eine zweite Eingangsklemme zur Versorgung, die dazu ausgelegt sind, jeweils an die erste Polarität bzw. an die zweite Polarität der elektrischen Spannungsquelle angeschlossen zu werden, und eine Ausgangsklemme, die an eine Ausgangsschaltzelle angeschlossen ist, und
wobei jede einem Hauptzweig zugeordnete Verzweigungsschaltung ein elektronischer Mehrpol mit Halbleitern ist, der K Verbindungselemente aufweist, wobei jedes Verbindungselement ein Thyristor dann ist, wenn die Spannungsquelle eine Gleichstromquelle ist, und eine Verbindung von zwei antiparallel geschalteten Thyristoren dann ist, wenn die Spannungsquelle eine Wechselstromquelle ist,
wobei jede Verzweigungsschaltung den Thyristoren zugeordnete Steuereinrichtungen aufweist,
wobei jedes Verbindungselement einer gleichen Verzweigungsschaltung einen an den Ausgang eines anderen Hilfszweigs angeschlossenen Eingang und einen an den ersten Eingang des Schalthauptzweiges angeschlossenen Ausgang aufweist, dem die Verzweigungsschaltung zugeordnet ist,
wobei die Steuereinrichtungen zum Steuern der Thyristoren der Verzweigungsschaltungen so konfiguriert sind, dass sie dann in einem Sperrzustand sind, wenn die Hauptzweige, denen sie zugeordnet sind, aktiv sind; wobei die Steuereinrichtungen zum Steuern der Thyristoren der Verzweigungsschaltungen so konfiguriert sind, dass sie dann, wenn irgendein mit einem Schaltorgan verbundener Schalthauptzweig defekt ist, er von irgendeinem der Hilfszweige unterstützt werden kann, der noch nicht aktiv geworden ist.

9. Statischer Wandler nach einem der Ansprüche 1 bis 8,
wobei der Wandler ein Wechselrichter (102) ist, der dazu ausgelegt ist, an eine Gleichspannungsquelle angeschlossen zu werden und einer elektrischen Last einen Wechselstrom mit zumindest einer Phase zu liefern,
wobei die erste Eingangsklemme (30; 170) und die zweite Eingangsklemme (32; 182) zur Versorgung eines Hauptzweiges dazu ausgelegt sind, jeweils an eine erste, positive Polarität (8; 134) bzw. an eine zweite, negative Polarität (10; 135) der elektrischen Spannungsquelle (4; 104; 604) angeschlossen zu werden,
wobei jede Schaltzelle eines Hauptzweiges bzw. eines Hilfszweiges ein Paar von strombidirektionalen Schaltern aufweist, die in Reihe geschaltet sind, wobei jeder strombidirektionale Schalter von einem steuerbaren Schalter und einer zugeordneten, antiparallel geschalteten Diode gebildet wird, wobei jeder steuerbare Schalter ein Element ist, das in der Gruppe enthalten ist, die aus Thyristoren, Transistoren vom Typ IGBT, Transistoren vom Typ MOS besteht;
wobei die Steuereinrichtungen zum Steuern der Schaltzellen des bzw. der Hauptzweige so konfiguriert sind, dass der Wandler als Wechselrichter mit einer oder mehreren Phasen fungiert,
wobei die Verzweigungsschaltung (130, 132) ein nicht steuerbares erstes stromunidirektionales Halbleiterverbindungselement (160, 162) und ein nicht steuerbares zweites stromunidirektionales Halbleiterverbindungselement (176, 178) aufweist, wobei das erste Verbindungselement (160, 162) von dem Ausgang des Hilfszweigs (136) ausgehend an die erste Eingangsklemme des Hauptzweiges direkt angeschlossen ist, das zweite Verbindungselement von dem Ausgang des Hilfszweigs ausgehend zur negativen zweiten Eingangsklemme des Hauptzweiges invers angeschlossen ist.

10. Statischer Wandler nach einem der Ansprüche 1 bis 8,
**dadurch gekennzeichnet,**
**dass** der Wandler ein Zerhacker ist, der dazu ausgelegt ist, an eine Gleichspannungsquelle angeschlossen zu werden und einer elektrischen Last einen Gleichstrom mit zumindest einer Ausgangsphase zu liefern,
wobei die erste Eingangsklemme (30; 170) und die zweite Eingangsklemme (32; 182) zur Versorgung eines Hauptzweiges dazu ausgelegt sind, jeweils an eine erste, positive Polarität (8; 134) bzw. an eine zweite, negative Polarität (10; 135) der elektrischen Spannungsquelle (4; 104; 604) angeschlossen zu werden,
wobei jede Schaltzelle eines Hauptzweiges bzw. eines Hilfszweiges einen bidirektionalen Schalter aufweist, der in Reihe mit einer Diode bzw. mit einem zweiten Schalter geschaltet ist, wobei jeder strombidirektionale Schalter von einem steuerbaren Schalter und einer zugeordneten, antiparallel geschalteten Diode gebildet wird, wobei jeder steuerbare Schalter ein Element ist, das in der Gruppe enthalten ist, die aus Thyristoren, Transistoren vom Typ IGBT, Transistoren vom Typ MOS besteht;
wobei die Steuereinrichtungen zum Steuern der Schaltzellen des bzw. der Hauptzweige so konfiguriert sind, dass der Wandler als Zerhacker fungiert, wobei die Verzweigungsschaltung, die einem Hauptzweig zugeordnet ist, ein einziges Halbleiterverbindungselement aufweist, das so konfiguriert ist, dass es stromunidirektional ist, wobei das unidirektionale Verbindungselement von dem Ausgang des Hilfszweigs ausgehend an die erste Eingangsklemme des zugeordneten Wandlungshauptzweiges direkt angeschlossen ist.

11. Statischer Wandler nach einem der Ansprüche 1 bis 8,
**dadurch gekennzeichnet,**
**dass** der Wandler ein Wandler aus der Familie der AC/AC-Wandler ist, der dazu ausgelegt ist, elektrische Energie von einer Wechselspannungsquelle umzuwandeln und einer elektrischen Last einen Wechselstrom mit zumindest einer Ausgangsphase zu liefern,
wobei die erste Eingangsklemme (30; 170) und die zweite Eingangsklemme (32; 182) zur Versorgung eines beliebigen Hauptzweiges dazu ausgelegt sind, jeweils an eine erste, positive Polarität (8; 134) bzw. an eine zweite, negative Polarität (10; 135) der elektrischen Spannungsquelle (4; 104; 604) angeschlossen zu werden,
wobei jede Schaltzelle eines Hauptzweiges bzw. eines Hilfszweiges ein Paar von strombidirektionalen Schaltern aufweist, die in Reihe geschaltet sind, wobei jeder strombidirektionale Schalter von einem steuerbaren Schalter und einer zugeordneten, antiparallel geschalteten Diode gebildet wird, wobei jeder steuerbare Schalter ein Element ist, das in der Gruppe enthalten ist, die aus Thyristoren, Transistoren vom Typ IGBT, Transistoren vom Typ MOS besteht; wobei die Steuereinrichtungen zum Steuern der Schaltzellen des bzw. der Hauptzweige so konfiguriert sind, dass der Wandler als AC/AC-Spannungswandler mit einer oder mehreren Ausgangsphasen fungiert,
wobei die Verzweigungsschaltung (130, 132) ein erstes strombidirektionales Halbleiterverbindungselement (160, 162) und ein zweites strom- und spannungsbidirektionales Halbleiterverbindungselement (176, 178) aufweist, wobei das erste Verbindungselement (160, 162) von dem Ausgang des Hilfszweigs (132) ausgehend direkt an die erste Eingangsklemme des Hauptzweiges angeschlossen ist, wobei das zweite Verbindungselement von dem Ausgang des Hilfszweigs ausgehend zur zweiten negativen Eingangsklemme des Hauptzweiges invers angeschlossen ist.

12. Statischer Wandler nach einem der Ansprüche 1 bis 9,
wobei der Wandler ein Wechselrichter (2102) ist, der dafür konfiguriert ist, an eine Gleichspannungsquelle (2104) angeschlossen zu werden und einer elektrischen Last einen Wechselstrom mit zumindest einer Phase (A, B, C) zu liefern,
wobei er eine kapazitive Teilerbrücke (2113) aufweist, die dazu konfiguriert ist, einen stabilen Mittelpunkt (2137) für die Eingangsversorgungsspannung zu bieten, und
wobei er für jede Phase und für jeden zugeordneten Hauptzweig (2106, 2108, 2110) ein Trennungselement (2115, 2119, 2123) zum Trennen des Hauptzweiges von dem Mittelpunkt (2137) der kapazitiven Teilerbrücke (2113) aufweist;
wobei jeder einer Phase zugeordnete Hauptzweig und der Hilfszweig eine andere Eingangsklemme zum Aufprägen des Spannungsmittelpunkts aufweisen;
wobei die erste Eingangsklemme (2190, 2192, 2194) und die zweite Eingangsklemme (2202, 2204, 2206) zur Versorgung eines beliebigen Hauptzweiges (2106, 2108, 2110) jeweils an eine erste, positive Polarität (2139) bzw. an eine zweite, negative Polarität (2140) der elektrischen Spannungsquelle (2104) durch ein anderes Paar von Trennungselementen (2214, 2116, 2118, 2120, 2122, 2124) angeschlossen sind,
wobei jede Eingangsklemme zum Aufprägen des Spannungsmittelpunkts an einen Sternpunkt (2137) der Eingangsversorgungsspannung durch ein Trennungselement (2115, 2119, 2123) zum Trennen des zugeordneten Hauptzweigs von dem Mittelpunkt (2137) der kapazitiven Teilerbrücke (2113) angeschlossen ist;
wobei jede Schaltzelle eines Hauptzweiges (2106, 2108, 2110) bzw. eines Hilfszweiges (2112) ein Paar von strombidirektionalen Schaltern aufweist, die in Reihe geschaltet sind, wobei jeder strombidirektionale Schalter von einem steuerbaren Schalter und einer zugeordneten, antiparallel geschalteten Diode gebildet wird, wobei jeder steuerbare Schalter ein Element ist, das in der Gruppe enthalten ist, die aus Thyristoren, Transistoren vom Typ IGBT, Transistoren vom Typ MOS besteht;
wobei jeder Hauptzweig (2106) eine Ausgangsschaltzelle (2164) aufweist, die an ihren beiden Schaltern eine Verbindungsklemme aufweist, die eine Ausgangsklemme einer Phase (A) bildet,
wobei die Verzweigungsschaltung (2125, 2126, 2127) ein nicht steuerbares erstes stromunidirektionales Halbleiterverbindungselement (2180, 2182, 2184) und ein nicht steuerbares zweites stromunidirektionales Halbleiterverbindungselement (2196, 2198, 2200) aufweist, wobei das erste Verbindungselement (2125, 2126, 2127) von dem Ausgang (2148) des Hilfszweigs (2112) ausgehend an die erste Eingangsklemme (2190, 2192, 2194) des Hauptzweiges (2106, 2108, 2110) direkt angeschlossen ist, das zweite Verbindungselement (2196, 2198, 2200) von dem Ausgang (2148) des Hilfszweigs (2212) ausgehend zur negativen zweiten Eingangsklemme des Hauptzweiges invers angeschlossen ist,
und wobei die Steuereinrichtungen zum Steuern der Schaltzellen (2172) des bzw. der Hauptzweige (2106, 2108, 2110) so konfiguriert sind, dass der Wandler dann als Wechselrichter mit einer oder mehreren Phasen fungiert, wenn sämtliche Hauptzweige fehlerfrei arbeiten.

13. Statischer Wandler nach Anspruch 12,
wobei der Wandler ein Wechselrichter (2102) mit mehreren Spannungspegeln vom Typ ANPC oder NPC ist,
wobei jede Schaltzelle eines Hauptzweiges (2106, 2108, 2110) bzw. eines Hilfszweiges (2112) ein Paar von strombidirektionalen Schaltern aufweist, die in Reihe geschaltet sind, wobei jeder strombidirektionale Schalter von einem steuerbaren Schalter und einer zugeordneten, antiparallel geschalteten Diode gebildet wird, wobei jeder steuerbare Schalter ein Element ist, das in der Gruppe enthalten ist, die aus Thyristoren, Transistoren vom Typ IGBT, Transistoren vom Typ MOS besteht;
wobei jeder Hauptzweig (2106) unmittelbar eine erste und eine zweite interne Schaltzelle (2162, 2164) aufweist, die parallel gruppiert sind, bzw. eine einzige interne Zelle, deren Reihe von Schaltern parallel zu einer Reihe von zwei Dioden geschaltet ist, sowie eine externe Schaltzelle (2166), in welcher die erste und die zweite internen Schaltzelle (2162, 2164) bzw. die einzige interne Zelle und die Reihe der beiden Dioden verschachtelt sind, wobei die erste interne Zelle (2162) bzw. die Reihe der beiden Dioden einen gemeinsamen Punkt (2142) haben, wobei die zweite interne Zelle bzw. die einzige interne Zelle die Ausgangszelle bildet und an ihren beiden Schaltern eine Verbindungsklemme aufweist, die eine Ausgangsklemme einer Phase (A) bildet,
und wobei die Steuereinrichtungen zum Steuern der Schaltzellen (2172) des bzw. der Hauptzweige (2106, 2108, 2110) so konfiguriert sind, dass der Wandler dann als Wechselrichter mit mehreren Spannungspegeln vom Typ ANPC oder vom Typ NPC mit einer oder mehreren Phasen fungiert, wenn sämtliche Hauptzweige fehlerfrei arbeiten.

14. Statischer Wandler nach Anspruch 12,
der für jeden Hauptzweig ein anderes zugeordnetes Trennungselement zum Trennen des Eingangsmittelpunkts des Hauptzweigs vom Mittelpunkt der kapazitiven Teilerbrücke aufweist.

15. Verfahren zum Inbetriebhalten eines statischen Wandlers nach einem der Ansprüche 1 bis 14,
**dadurch gekennzeichnet,**
**dass** es Schritte umfasst, die darin bestehen:
- **dass** die Steuereinrichtungen zum Steuern der steuerbaren Schalter der Schaltzellen der Hauptzweige so konfiguriert sind (1010), dass der statische Wandler dann nominal auf den Hauptzweigen betrieben wird, wenn keine der die Hauptzweige bildenden Leistungsbauteile defekt ist,
- **dass** dann, wenn ein Fehler an einem Schalter einer Hauptzelle auftritt, sämtliche Schalter des Hauptzweigs, zu denen der defekte Schalter gehört und die in Reihe geschaltet sind, für eine Zeitdauer t zum Erreichen der Trennung des ausgefallenen Hauptzweigs kurzgeschlossen (1020) werden, wobei die Zeitdauer länger ist als eine erste Zeitdauer t1, damit der Hauptzweig einen stabilen und dauerhaft leitfähigen Zustand mit sehr geringer Impedanz von weniger als einigen zehn Milliohm erreicht, und wobei die Zeitdauer kürzer als eine zweite Zeitdauer t2 ist, unter welcher die Unversehrtheit der Bauteile des defekten Hauptzweigs aufrechterhalten bleibt, ebenso wie der erreichte leitfähige Zustand des defekten Hauptzweigs,
- **dass** die Hilfsschalter, die mit der gleichen Konfiguration wie die der Schalter des ausgefallenen Hauptzweigs konfiguriert sind, automatisch über die Verzweigungsschaltung des ausgefallenen Hauptzweigs angeschlossen werden (1030), der zum stabilen Leiter geworden ist.

## Claims

1. Static converter, designed for the conversion of electrical energy between a power voltage source (4, 104, 504; 904; 2104) and an electrical load (6, 506) comprising of :
a main static conversion arm (16, 106, 512; 906 ; 2106) comprising of at least one electronic switching cell with semiconductors equipped with associated control means (38; 2172), a first input terminal (30, 170; 562; 966; 2190) and a second power supply input terminal (32, 182) capable of being connected respectively to a first polarity (8, 134, 524; 936; 2139) and a second polarity (10, 135; 526; 938; 2140) of the power source, an output terminal (34) connected to an output switching cell (36) and suitable for being connected to the electrical load (6), each switching cell being configured through its associated control means (38) to be active in a predetermined nominal mode of the converter,
a pair of isolation components (70, 72, 114, 116, 515, 516; 914, 916; 2114, 2116), associated with the main switching arm (16; 106, 512; 906; 2106), formed of a first isolation component and a second isolation component each forming a dipole, the first isolation component (70, 114, 515; 914; 2114) and the second isolation component (72, 116; 516; 916; 2116) being connected directly and respectively to the first terminal (30, 170; 562; 966; 2190) and to the second power supply input terminal (32, 182) of the main arm (16, 106, 512; 906),
**characterised in that**
the converter comprises of
an emergency back up conversion arm (18, 112, 514; 912; 2112) consisting of at least one electronic switching cell with semiconductors equipped with associated control means (58), a first input terminal (50) and a second power supply input terminal (52), suitable for being connected respectively to the first polarity (8, 134, 524; 936; 2139) and the second polarity (10, 135; 526; 938; 2140) of the power source (4, 104, 504; 904), an output terminal (54, 136; 530; 940; 2104) connected to an output switching cell (56, 142; 538), and
an electronic semiconductor switching circuit (26, 133; 522; 930; 2125) having a connection element (80, 164; 560; 960; 2180) connected between the output terminal (54, 136; 530; 940; 2148) of the emergency back up arm (18, 112, 514; 912; 2112) and an input terminal of the main arm from among the first input terminal and the second input terminal of the main arm,
the switching cell or cells of the main arm connected in series between the first input terminal and the second input terminal are each capable of providing a stable permanent impedance less than a few tens of milli-ohms when the main arm has experienced a failure resulting from a thermal runaway or a short circuit in one of its semiconductor components,
the isolation components (70, 72; 114, 116; 515, 516; 914, 916; 2114, 2116) of the main arm are dimensioned in a manner so as to isolate the main arm after the lapse of a first time period t1 for the establishment of a stable low impedance failure mode on the switching cell or cells of the main conversion arm connected in series and before the lapse of a second time period t2 to avoid the creation of a circuit opening on the main conversion arm,
the control means of the emergency back up cell or cells forming the emergency back up arms are capable of being deployed after the isolation of the main conversion arm that has become faulty so as to replace the main arm partially or in its entirety,
the connection element (80, 164, 560, 960, 2180) is configured to be in a locked (Off) state when the main arm is active in the nominal mode and to be in a conductive (On) state when the main arm has become faulty and the emergency back up arm has become active.

2. Static converter according to claim 1, wherein the connection element (80, 164; 560; 960; 2180) is an element that is included in the assembly consisting of a diode, a thyristor, a combination of two thyristors connected in inverse parallel (head to tail) and a transistor.

3. Static converter according to any one of claims 1 to 2, **characterised in that** the semiconductor elements of the switching cells of the emergency back up conversion arm (18; 112; 514; 912; 2112) are configured so as to be in a locked state when the main arm is active in the nominal mode and to replace the main arm partially or in its entirety after isolation of the arm that has become faulty.

4. Static converter according to any one of claims 1 to 3, comprising means for aiding in the isolation (28) of the main arm, the isolation aiding means comprising of
an auxiliary thyristor (90) or a combination of two auxiliary thyristors assembled in inverse parallel, connected in parallel to the first input terminal (30) and to the second input terminal (32) of the main arm (16), an auxiliary thyristor being connected when the voltage source is a direct current source and a combination of two auxiliary thyristors connected in inverse parallel being used when the voltage source is an alternating current source, and
control means (92) of the auxiliary thyristor (90) or of the two auxiliary thyristors configured in a manner such that if the faulty main conversion arm (16) is not symmetrically isolated by the pair (20) of isolation components (70, 72) that are associated with it, it creates a short circuit at the terminals of the electrical load (6) in order to induce a symmetrical isolation by each isolation component (70, 72) of the pair.

5. Static converter according to claim 4, comprising for each switching cell of the main conversion arm, associated rapid protection means capable of detecting an intolerable short circuit current flowing through the cell in comparison to a predetermined threshold value of a current and of triggering the opening of the switching cell after the detection of the threshold current being exceeded.

6. Static converter according to any one of claims 1 to 5, further comprising the means for detecting (24) the faulty main arm (16) that are capable of commanding the means of control of the switching cells of the emergency back up arm (18) to adopt the same control configuration as that of the arm detected as being faulty.

7. Static converter according to any one of claims 1 to 6, **characterised in that**
the static converter comprises at least two main arms (16 ; 106, 108 ; 606, 608)
each main arm (16, 106, 108; 606, 608) being identical in structure and including at least one electronic switching cell equipped with associated control means, a first input terminal (30, 170, 172) and a second power supply input terminal (32, 182, 184) capable of being respectively connected to the first polarity (8, 134) and the second polarity (10, 135) of the power source (4, 134), a phase output terminal connected to an output switching cell (36, 137, 138) capable of being connected to a separate and distinct phase of the electrical load, each switching cell being configured through its control means so as to be active in a predetermined nominal mode of the converter,
the converter comprises, for each main conversion arm (16, 106, 108; 606, 608), of an associated pair of isolation components that are formed of a first isolation component (20, 114, 118; 612, 614) and a second component isolation (72, 116, 120; 612, 614) each forming a dipole, the first isolation component (20, 114, 118; 612, 614) and the second isolation component (72, 116, 120; 612 , 614) being directly and respectively connected to the first input terminal (30, 170, 172) and the second power supply input terminal (30, 170, 172), of the associated main arm (16, 106, 108; 606, 608),
the converter comprises a single emergency back up conversion arm (18, 112; 612) having at least one output switching cell (56, 142; 612) and an output terminal (54, 136) connected to the output switching cell (56, 142; 612), and
the converter comprises, for each main conversion arm (16, 106, 108; 606, 608) an associated switching circuit (26, 130, 132; 628, 630) having a connection element (80, 160, 162) connected between the output terminal of the emergency back up arm (54, 136) and the first input terminal (30, 170, 172) of the associated main conversion arm,
the converter comprises, for each main conversion arm (16, 106, 108; 606, 608), means for detection and location (24) of the faulty main arm (16) that are capable of commanding the control means of the switching cells of the emergency back up arm (18) to adopt the same control configuration as that of the faulty arm that has been detected and located,
the switching cell or cells of any main arm connected in series between the first input terminal and the second input terminal are each capable of providing a stable permanent impedance less than a few tens of milli-ohms when the main arm has experienced a failure resulting from a thermal runaway or a short circuit of one of its semiconductor components,
the isolation components (20 ; 114, 118,116, 120 ; 612, 614) of each main arm (16 ; 106, 108 ; 606, 608) are dimensioned in a manner so as to isolate the main arm after the lapse of a first time period t1 for the establishment of a stable low impedance failure mode on the switching cell or cells of the main conversion arm and before the lapse of a second time period t2 to avoid the creation of a circuit opening on the main conversion arm
the control means of the emergency back up cell or cells forming the emergency back up arms are capable of being deployed after the isolation of any of the main arms that has become faulty so as to replace partially or in its entirety the main arm that has become faulty,
the connection element or the two connection elements of each switching circuit associated with a main arm are configured to be in a locked (Off) state when the main arm is active in the nominal mode and in a conductive (On) state when the main arm has become faulty and the emergency back up arm has become active.

8. Static converter according to any one of claims 1 to 6, **characterised in that** it comprises
a first number N greater than or equal to two of the main switching arms, a second number K greater than or equal to two of the emergency back up switching arm, the same second number K of the switching circuits, each switching circuit being associated with a distinctly separate main switching arm, the first number N being greater than or equal to the first number K, and **in that**
each main arm (16 ; 106, 108 ; 606, 608) is identical in structure and comprises at least one electronic switching cell equipped with associated control means, a first input terminal (30, 170, 172) and a second power supply input terminal (32 ; 182, 184) capable of being respectively connected to the first polarity (8, 134) and the second polarity (10, 135) of the power source (4, 134), a phase output terminal connected to an output switching cell (36, 137, 138) capable of being connected to a separate and distinct phase of the electrical load, each switching cell being configured through its control means so as to be active in a predetermined nominal mode of the converter;
the converter comprises for each main conversion arm (16, 106, 108; 606, 608), an associated pair of isolation components that are formed of a first isolation component (20, 114, 118; 612, 614) and of a second isolation component (72, 116, 120; 612, 614) each forming a dipole, the first isolation component (20, 114, 118; 612, 614) and the second isolation component (72; 116, 120; 612, 614) being directly and respectively connected to the first input terminal (30, 170, 172) and the second power supply input terminal (30, 170, 172), of the associated main arm (16, 106, 108; 606, 608) ;
each emergency back up arm consisting of at least one electronic switching cell with semiconductors equipped with associated control means, a first input terminal and a second power supply input terminal, suitable for being connected respectively to the first polarity and the second polarity of the power source, an output terminal connected to an output switching cell ; and
each switching circuit associated with a main arm is an electronic semiconductor multi-pole comprising K connection elements, each connection element is a thyristor when the voltage source is a direct current source and a combination of two auxiliary thyristors connected in inverse parallel when the voltage source is an alternating current source,
each switching circuit comprises of control means associated with thyristors,
each connection element of the same switching circuit includes an input connected to the output of a different emergency back up arm and an output connected to the first input of the main switching arm with which the switching circuit is associated.
the control means of the thyristors of the switching circuits are configured so as to be in a locked state when the main arms with which they are associated are active ;
the control means of the thyristors of the switching circuits are configured in a manner such that when any which main switching arm connected to a switcher is faulty, it is able to be backed up by any one of the emergency back up arms that have not yet become active .

9. Static converter according to any one of claims 1 to 8, wherein
the converter is an inverter (102) capable of being connected to a direct current voltage source and of outputting to an electrical load an alternating current over at least one phase,
the first input terminal (30 ;170) and the second power supply input terminal (32 ;182) of a main arm are capable of being respectively connected to a positive first polarity (8 ; 134) and a negative second polarity (10 ;135) of the power source (4 ;104 ; 604) ;
each switching cell of a main arm or of an emergency back up arm includes a pair of current-bidirectional switches connected in series, each current-bidirectional switch being formed by a controlled switch and an associated diode connected in antiparallel, each controlled switch being an element included in the assembly formed by thyristors, IGBT transistors, and MOS transistors ;
the control means of the switching cells of the main arm or arms are configured in a manner such that the converter operates as an inverter over one or more phases ;
the switching circuit (130, 132) comprises of a first uncontrolled unidirectional power semiconductor connection element (160, 162) and a second uncontrolled unidirectional power semiconductor connection element (176, 178), the first connection element (160, 162) being connected in direct from the output of the emergency back up arm (136) to the first input terminal of the main arm, the second connection element being connected in reverse from the output of the emergency back up arm to the second negative input terminal of the main arm.

10. Static converter according to any one of claims 1 to 8, **characterised in that** the converter is a chopper capable of being connected to a direct current voltage source and of outputting to an electrical load a direct current over at least one output phase,
the first input terminal (30 ;170) and the second power supply input terminal (32 ;182) of a main arm are capable of being respectively connected to a positive first polarity (8 ; 134) and a negative second polarity (10, 135) of the power source (4 ;104 ; 604),
each switching cell of a main arm or of an emergency back up arm includes a bidirectional switch connected in series with a diode or a second switch, each current-bidirectional switch being formed by a controlled switch and an associated diode connected in antiparallel, each controlled switch being an element included in the assembly formed by thyristors, IGBT transistors, and MOS transistors ;
the control means of the switching cells of the main arm or arms are configured in a manner such that the converter operates as a chopper,
the switching circuit associated with a main arm comprises of a single semiconductor connection element configured to have unidirectional power flow, the unidirectional connection element being connected in direct from the output of the emergency back up arm to the first input terminal of the associated main conversion arm.

11. Static converter according to any one of claims 1 to 8, **characterised in that**
the converter is a converter of the AC / AC family capable of converting electrical energy between an alternating current voltage source and of outputting to an electrical load an alternating current over at least one output phase,
the first input terminal (30, 170) and the second power supply input terminal (32, 182) of any main arm are capable of being respectively connected to a positive first polarity (8, 134) and a negative second polarity (10, 135) of the power source (4, 104; 604),
each switching cell of a main arm or of an emergency back up arm includes a pair of current-bidirectional switches connected in series, each current-bidirectional switch being formed by a controlled switch and an associated diode connected in antiparallel, each controlled switch being an element included in the assembly formed by thyristors, IGBT transistors, and MOS transistors ;
the control means of the switching cells of the main arm or arms are configured in a manner such that the converter operates as an AC / AC type voltage converter over one or more output phases,
the switching circuit (130, 132) comprises of a current-bidirectional first semiconductor connection element (160, 162) and a current- and voltage-bidirectional second semiconductor connection element (176, 178), the first connection element (160, 162) being connected from the output of the emergency back up arm (136) to the first input terminal of the main arm, the second connection element being connected in reverse from the output of the emergency back up arm to the negative second input terminal of the main arm.

12. Static converter according to any one of claims 1 to 9, wherein
the converter is an inverter (2102), configured to be connected to a direct current voltage source (2104) and for outputting to an electrical load an alternating current over at least one phase (A, B, C),
comprising a capacitive divider bridge (2113), configured to provide a stable input power supply voltage centre tap (2137), and
comprising for each phase and each associated main arm (2106, 2108, 2110) an isolation component (2115, 2119, 2123) of the main arm from the centre tap (2137) of the capacitive divider bridge (2113),
each main arm associated with a phase, and the emergency back up arm comprises a separate input terminal for imposition of voltage centre tap;
the first input terminal (2190, 2192, 2194) and the second input power supply terminal (2202, 2204, 2206) of any main arm (2106, 2108, 2110) are connected respectively to a positive first polarity (2139) and to a negative second polarity (2140) of the power source (2104) through a different pair of isolation components (2214, 2116, 2118, 2120, 2122, 2124),
each input terminal for imposition of voltage centre tap is connected to the input supply voltage neutral point (2137) via an isolation component (2115, 2119, 2123) of the associated main arm from the centre tap (2137) of the capacitive divider bridge (2113),
each switching cell of a main arm (2106, 2108, 2110) or of an emergency back up arm (2112) comprises a pair of current-bidirectional switches connected in series, each current-bidirectional switch being formed by a controlled switch and an associated diode connected in antiparallel, each controlled switch being an element included in the assembly consisting of thyristors, IGBT transistors, and MOS transistors,
each main arm (2106) comprises an output switching cell (2164) having a connection terminal at its two switches forming an output terminal of one phase (A),
the switching circuit (2125, 2126, 2127) comprises a first uncontrolled unidirectional current flow semiconductor connection element (2180, 2182, 2184) and a second uncontrolled unidirectional current flow semiconductor connection element (2196, 2198, 2200), the first connection element (2125, 2126, 2127) being connected in direct from the output (2148) of the emergency back up arm (2112) to the first input terminal (2190, 2192, 2194) of the main arm (2106 , 2108, 2110), the second connection element (2196, 2198, 2200) being connected in reverse from the output (2148) of the emergency back up arm (2212) to the negative second input terminal of the main arm ;
the means for controlling the switching cells (2172) of the main arm or arms (2106, 2108, 2110) are configured in a manner such that the converter operates as inverter over one or more phases when all main arms function without fault.

13. Static converter according to claim 12, wherein
the converter is a multi-level voltage ANPC or NPC type inverter (2102),
each switching cell of a main arm (2106, 2108, 2110) or of an arm of emergency back up (2112) comprises a pair of current-bidirectional switches connected in series, each current-bidirectional switch being formed by a controlled switch and an associated diode connected in antiparallel, each controlled switch being an element included in the assembly consisting of thyristors, IGBT transistors, and MOS transistors,
each main arm (2106) comprises on its own a first and a second internal switching cells (2162, 2164), grouped in parallel, or a single internal cell the series of switches of which is connected in parallel with a series of two diodes, and an external switching cell (2166) in which are nested the first and second internal switching cells (2162, 2164) or the single internal cell and the series of two diodes, the first internal cell (2162) or the series of two diodes having a common point (2142), the second internal cell or the single internal cell forming the output cell and having a terminal for connection to its two switches forming an output terminal of a phase (A),
the means for controlling the switching cells (2172) of the main arm or arms (2106, 2108, 2110) are configured such that the converter operates as a multi-level voltage ANPC or NPC type inverter over one or more phases when all main arms function without fault.

14. Static converter according to claim 12 comprising for each main arm a different associated means of isolation of the input centre tap of the main arm from the centre tap of the capacitive divider bridge.

15. A method for maintaining in service a static converter defined according to one of claims 1 to 14, **characterised in that** it comprises the steps consisting **in that**:
- the control means of the controlled switches of the switching cells of the main arms are configured (1010) so that the static converter operates in a nominal manner over the main arms when none of the power components forming the main arm is faulty,
- when a fault occurs on a switch of a main cell, all the switches of the main arm to which the defective switch belongs and which are connected in series, are short circuited (1020) for a time period t for obtaining the isolation of the main arm that became faulty, which is greater than a first time period t1 for the main arm to reach a stable and permanent conductive state at very low impedance less than a few tens of milli-ohms, and less than a second time period t2 below which the integrity of the components of the defective main arm is preserved as well as the conductive state attained by the defective main arm,
- the emergency back up switches configured in the same configuration as that of the switches of the faulty main arm are connected (1030) automatically by the switching circuit of the defective main arm that became a stable conductor.
